# EUROPEAN PATENT APPLICATION

(11) **EP 2 838 143 A1**
(43) Date of publication of application: **18.02.2015**
(21) Application number: 13788248.6
(22) Date of filing: 26.04.2013
(51) Int. Cl.: H01M 4/62, H01M 4/36, H01M 4/38, H01M 4/42, H01M 4/46, H01M 4/56

(54) **NEGATIVE ELECTRODE FOR NONAQUEOUS ELECTROLYTE RECHARGEABLE BATTERY AND NONAQUEOUS ELECTROLYTE RECHARGEABLE BATTERY USING SAME**

(30) Priority: 07.05.2012 JP 2012106309
(71) Applicant: Furukawa Electric Co., Ltd., Chiyoda-ku Tokyo 100-8322 (JP); The Furukawa Battery Co., Ltd., Yokohama-shi Kanagawa 240-0006 (JP)
(72) Inventor: NISHIKUBO, Hideo, Tokyo 100-8322 (JP); NISHIMURA, Takeshi, Tokyo 100-8322 (JP); TANI, Toshio, Tokyo 100-8322 (JP); HATAYA, Koji, Tokyo 100-8322 (JP); HIKAMI, Toshiya, Tokyo 100-8322 (JP); KUBOTA, Masaaki, Yokohama-shi Kanagawa 240-0006 (JP); ABE, Hidetoshi, Yokohama-shi Kanagawa 240-0006 (JP)
(74) Representative: Horn Kleimann Waitzhofer
(86) International application number: PCT/JP2013/062378
(87) International publication number: WO 2013/168605

(57) **Abstract**

The purpose of the invention is to obtain a negative electrode for a large-capacity nonaqueous electrolyte rechargeable battery having good cycle characteristics. In the present invention, a negative electrode for a nonaqueous electrolyte rechargeable battery is used as a solution, said negative electrode being characterized by having an active material layer on a current collector, said active material layer containing at least granules, and one or more types of coating binder comprising any of a polyimide, polybenzimidazole, polyamide-imide and polyamide. The negative electrode is further characterized in that the granules contain at least active material particles containing: at least one type of element selected from a group comprising Si, Sn, Al, Pb, Sb, Bi, Ge, In and Zn; and a granulation binder.

## Description

### FIELD OF THE INVENTION

This invention relates to a negative electrode for a nonaqueous electrolyte rechargeable battery and the like, and more particularly to a negative electrode for a nonaqueous electrolyte rechargeable battery with large-capacity and long-life.

### BACKGROUND OF THE INVENTION

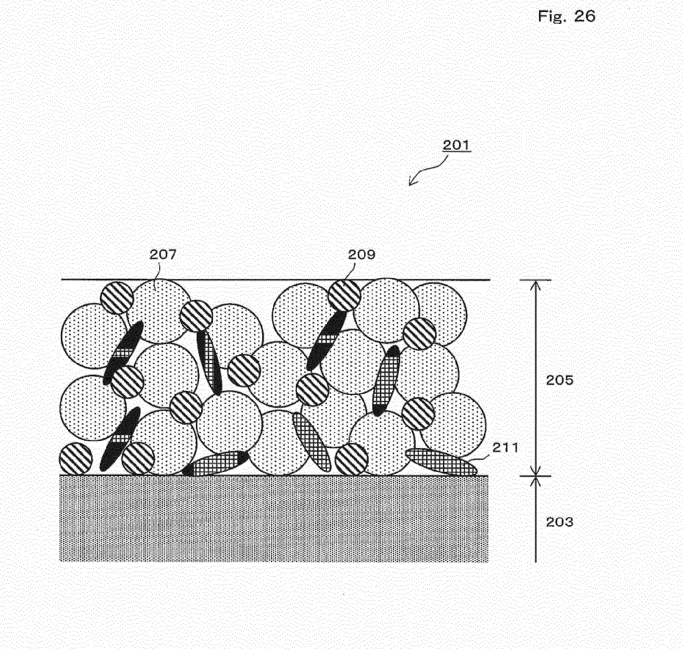

Conventionally, nonaqueous electrolyte rechargeable batteries using graphite as a negative electrode active material (lithium ion rechargeable batteries) are used in practice. In these nonaqueous electrolyte rechargeable batteries, a negative electrode for nonaqueous electrolyte rechargeable battery 201 as shown in FIG. 26 has been used. The negative electrode for nonaqueous electrolyte rechargeable battery 201 includes active material particles 207, binder 209 and conductive agents 211 such as carbon black and the like that are mixed and kneaded to make slurry which is then applied onto a current collector 203 and dried to form an active material layer 205.

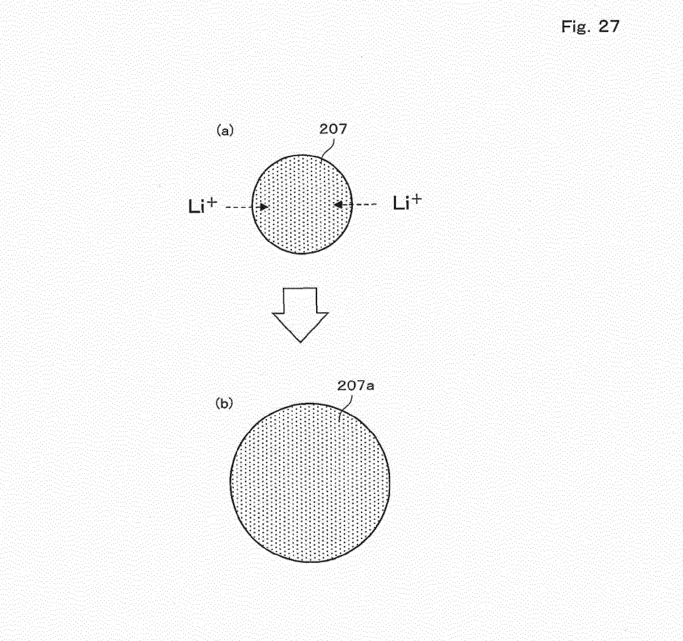

On the other hand, negative electrodes for nonaqueous electrolyte rechargeable batteries in which lithium compounds of metals or alloys with large theoretical capacity, especially silicon and its alloys, are used as a negative active material have been developed aiming for high capacity. However, since silicon after absorbing lithium ions expands four times in volume as large as the silicon before absorbing the lithium ions, a negative electrode using silicon alloy as a negative electrode active material repeats expanding and contracting during charging and discharging cycles. For example, FIG. 27 shows an active particle 207 that expands four times in volume and 60 % in linear expansion coefficient after charging and becomes a silicon active material particle 207a.

Also, since binder such as styrene butadiene rubber and polyvinylidene fluoride that are commonly used in slurry including a graphite negative electrode active material cannot follow the expansion and the contraction, problems such as pulverization of the silicon negative electrode active material, exfoliation of the negative electrode active material from the current collector, cracking in the active material layer, and deterioration of conductivity between negative active materials arise and cause shorter life cycle compared to conventional graphite electrodes.

Therefore, instead of the conventional binder, a use of stronger, heat-resistant, and high durable polyimide binder has been considered. (For example, see Patent Document 1).

### PRIOR ART DOCUMENTS

### PATENT DOCUMENTS

[Patent Document 1] Japanese Unexamined Patent Application Publication No.2011-070892(JP-A-2011-070892)

### SUMMARY OF THE INVENTION

### PROBLEMS TO BE SOLVED BY THE INVENTION

However, negative electrode active materials and copper foil, which is a current collector, adhere very strongly with the use of polyimide binder, and when the negative electrode active materials expand and contract, tension and compression are applied to the copper foil causing irreversible deformation of the copper foil such as occurrence of wrinkles. If this kind of irreversible deformation occurs, not only it harmfully affects the charging and discharging and deteriorates the cycle characteristics, but also the safety and reliability of the batteries and evenness of the products are impaired.

The present invention was achieved in view of such problems. Its object is to obtain a negative electrode for a large-capacity nonaqueous electrolyte rechargeable battery having good cycle characteristics.

### MEANS FOR SOLVING PROBLEMS

To achieve the above object, it has been examined and found that a method in which negative active materials are granulated and then added to slurry to form an active material layer can relax the stress applied to the copper foil due to expansion and contraction of the negative electrode active materials and prevent deformation of the copper foil. The present invention has been invented based on this research.

The present invention provides a negative electrode for a nonaqueous electrolyte rechargeable battery and the like as described below.
(1) A negative electrode for a nonaqueous electrolyte rechargeable battery comprising an active material layer on a current collector. The active material layer includes at least granules and one or more types of coating binder comprising any of polyimide, polybenzimidazole, polyamide imide, and polyamide. The granules include at least active material particles including at least one type of an element A selected from a group consisting of Si, Sn, Al, Pb, Sb, Bi, Ge, In, and Zn, and a granulation binder.
(2) The negative electrode for a nonaqueous electrolyte rechargeable battery according to (1) above in which the granulation binder comprises any one or more of polyimide, polybenzimidazole, styrene butadiene rubber, polyvinylidene fluoride, carboxyl methyl cellulose, and polyacrylic acid.
(3) The negative electrode for a nonaqueous electrolyte rechargeable battery according to (1) above in which the granules further include any one or more of carbon black, carbon nanotube and carbon fiber as a conductive agent.
(4) The negative electrode for a nonaqueous electrolyte rechargeable battery according to (1) above in which the active material layer further includes any one or more of carbon black, carbon nanotube and carbon fiber as a conductive agent.
(5) The negative electrode for a nonaqueous electrolyte rechargeable battery according to (1) above in which the average particle diameter of the active material particles is 2 nm to 500 nm.
(6) The negative electrode for a nonaqueous electrolyte rechargeable battery according to (1) above in which the active material particle is a nanosized particle comprising an element A and an element D. The element A is at least one type of an element selected from the group consisting of Si, Sn, Al, Pb, Sb, Bi, Ge, In, and Zn. The element D is at least one type of an element selected from the group consisting of Fe, Co, Ni, Ca, Sc, Ti, V, Cr, Mn, Sr, Y, Zr, Nb, Mo, Tc, Ru, Rh, Ba, lanthanoid elements (except for Pm), Hf, Ta, W, Re, Os and Ir. The nanosized particle at least includes a first phase, which is a simple substance or a solid solution of the element A, and a second phase, which is a compound of the element A and the element D. The first phase and the second phase are joined via an interface. The first phase and the second phase are exposed to the outer surface of the nanosized particle. The first phase having an approximately spherical surface except for the interface.
(7) The negative electrode for a nonaqueous electrolyte rechargeable battery according to (6) above in which the element A is Si and the element D is at least one type of an element selected from the group consisting of Fe, Co, Ni, Ca, Sc, Ti, V, Cr, Mn, Sr, Y, Zr, Nb, Mo, Ru, Rh, Ba, Hf, Ta, W and Ir.
(8) The negative electrode for a nonaqueous electrolyte rechargeable battery according to (6) above in which the second phase is a compound DAₓ (1 < x <= 3).
(9) The negative electrode for a nonaqueous electrolyte rechargeable battery according to (6) above in which the nanosized particle further includes a third phase which is a compound of the element A and the element D, and the third phase is dispersed in the first phase.
(10) The negative electrode for a nonaqueous electrolyte rechargeable battery according to (9) above in which the first phase is mainly crystalline silicon and the second phase and/or the third phase is crystalline silicide.
(11) The negative electrode for a nonaqueous electrolyte rechargeable battery according to (6) above in which the nanosized particle further includes an element D' which is at least one type of an element selected from the group consisting of Fe, Co, Ni, Ca, Sc, Ti, V, Cr, Mn, Sr, Y, Zr, Nb, Mo, Tc, Ru, Rh, Ba, lanthanoid elements (except for Pm), Hf, Ta, W, Re, Os and Ir. The element D' is a different element from the element D which forms the second phase. The nanosized particle further includes a fourth phase which is a compound of the element A and the element D'. The first phase and the fourth phase are joined via an interface. The fourth phase is exposed to the outer surface of the nanosized particle.
(12) The negative electrode for a nonaqueous electrolyte rechargeable battery according to (1) above in which the active material particle is a nanosized particle including the element A and an element M. The element A is at least one type of an element selected from the group consisting of Si, Sn, Al, Pb, Sb, Bi, Ge, In, and Zn. The element M is at least one type of an element selected from the group consisting of Cu, Ag and Au. The nanosized particle includes a sixth phase, which is a simple substance or a solid solution of the element A, and a seventh phase, which is a compound of the element A and the element M, or a simple substance or a solid solution of the element M. The sixth phase and the seventh phase are joined via an interface. Both of the sixth phase and the seventh phase are exposed to the outer surface of the nanosized particle. The sixth phase and the seventh phase have approximately spherical surfaces except for the interface.
(13) The negative electrode for a nonaqueous electrolyte rechargeable battery according to (12) above in which the seventh phase is a compound MAₓ (x <=1, 3 < x).
(14) The negative electrode for a nonaqueous electrolyte rechargeable battery according to (12) in which the nanosized particle further includes an element M' which is at least one type of an element selected from the group consisting of Cu, Ag, and Au. The element M' is a different element from the element M which forms the seventh phase. The nanosized particle further includes a eighth phase which is a compound of the element A and the element M', or a simple substance or a solid solution of the element M'. The sixth phase and the eighth phase are joined via an interface. The eighth phase is exposed to the outer surface of the nanosized particle. The eighth phase has an approximately spherical surface except for the interface.
(15) The negative electrode for a nonaqueous electrolyte rechargeable battery according to (12) in which the nanosized particle further includes an element D which is at least one type of an element selected from the group consisting of Fe, Co, Ni, Ca, Sc, Ti, V, Cr, Mn, Sr, Y, Zr, Nb, Mo, Tc, Ru, Rh, Ba, lanthanoid elements (except for Pm), Hf, Ta, W, Re, Os and Ir. The nanosized particle further includes a nineth phase which is a compound of the element A and the element D. The sixth phase and the nineth phase are joined via an interface. The nineth phase is exposed to the outer surface of the nanosized particle.
(16) The negative electrode for a nonaqueous electrolyte rechargeable battery according to (15) above in which the nanosized particle includes a tenth phase which is a compound of the element A and the element D, and a part or the whole of the tenth phase is covered with the sixth phase.
(17) The negative electrode for a nonaqueous electrolyte rechargeable battery according to (15) above in which the nanosized particle further includes an element D' which is at least one type of an element selected from the group consisting of Fe, Co, Ni, Ca, Sc, Ti, V, Cr, Mn, Sr, Y, Zr, Nb, Mo, Tc, Ru, Rh, Ba, lanthanoid elements (except for Pm), Hf, Ta, W, Re, Os and Ir. The element D' is a different element from the element D which forms the nineth phase. The nanosized particle further includes a eleventh phase which is a compound of the element A and the element D'. The sixth phase and the eleventh phase are joined via an interface. The eleventh phase is exposed to the outer surface of the nanosized particle.
(18) The negative electrode for a nonaqueous electrolyte rechargeable battery according to (17) above in which the nanosized particle further includes a twelfth phase which is a compound of the element A and the element D', and a part or the whole of the twelfth phase is covered with the sixth phase.
(19) The negative electrode for a nonaqueous electrolyte rechargeable battery according to (1) above in which the active material particle is a nanosized particle which includes an element A-1, an element A- 2, and the element D. The element A-1 and the element A-2 are two types of elements selected from the group consisting of Si, Sn, Al, Pb, Sb, Bi, Ge, In, and Zn. The element D is at least one type of an element selected from the group consisting of Fe, Co, Ni, Ca, Sc, Ti, V, Cr, Mn, Sr, Y, Zr, Nb, Mo, Tc, Ru, Rh, Ba, lanthanoid elements (except for Pm), Hf, Ta, W, Re, Os and Ir. The nanosized particle includes a thirteenth phase, which is a simple substance or a solid solution of the element A-1, a fourteenth phase, which is a simple substance or a solid solution of the element A - 2, and a fifteenth phase, which is a compound of the element A - 1 and the element D. The thirteenth phase and the fourteenth phase are joined via an interface. The thirteenth phase and the fifteenth phase are joined via an interface. The thirteenth phase and the fourteenth phase have approximately spherical surfaces except for the interface. The thirteenth phase, the fourteenth phase, and the fifteenth phase are exposed to the outer surface of the nanosized particle.
(20) The negative electrode for a nonaqueous electrolyte rechargeable battery according to (19) above in which the element A - 1 and the element A- 2 are two types of elements selected from the group consisting of Si, Sn, and Al, and the element D is one type of an element selected from the group consisting of Fe, Co, Ni, Ca, Sc, Ti, V, Cr, Mn, Sr, Y, Zr, Nb, Mo, Tc, Ru, Rh and Ba.
(21) The negative electrode for a nonaqueous electrolyte rechargeable battery according to (19) above in which the nanosized particle further includes a sixteenth phase which is a compound of the element A - 1 and the element D, and a part or the whole of the sixteenth phase is covered with the thirteenth phase.
(22) The negative electrode for a nonaqueous electrolyte rechargeable battery according to (19) above in which the nanosized particle further includes a seventeenth phase which is a compound of the element A - 1 and the element D, and the seventeenth phase joins with the fourteenth phase via an interface and is exposed to the outer surface of the nanosized particle..
(23) The negative electrode for a nonaqueous electrolyte rechargeable battery according to (19) above in which any one or more of the fifteenth phase, the sixteenth phase, and the seventeenth phase is a compound D(A- 1)ₓ (1 < x <= 3).
(24) The negative electrode for a nonaqueous electrolyte rechargeable battery according to (19) above in which the nanosized particle further includes an element A- 3 which is one type of an element selected from the group consisting of Si, Sn, Al, Pb, Sb, Bi, Ge, In, and Zn. The element A- 3 is a different type of element from the element A - 1 and the element A - 2. The nanosized particle includes a eighteenth phase which is a simple substance or a solid solution of the element A - 3. The thirteenth phase and the eighteenth phase are joined via an interface. The eighteenth phase has an approximately spherical surface except for the interface. The eighteenth phase is exposed to the outer surface of the nanosized particle.
(25) The negative electrode for a nonaqueous electrolyte rechargeable battery according to (19) above in which the nanosized particle further includes the element D' which is at least one type of an element selected from the group consisting of Fe, Co, Ni, Ca, Sc, Ti, V, Cr, Mn, Sr, Y, Zr, Nb, Mo, Tc, Ru, Rh, Ba, lanthanoid elements (except for Pm), Hf, Ta, W, Re, Os, and Ir. The element D' is a different type of element from the element D that forms the fifteenth phase. The nanosized particle further includes a nineteenth phase which is a compound of the element A - 1 and the element D'. The thirteenth phase and the nineteenth phase are joined via an interface. The nineteenth phase is exposed to the outer surface of the nanosized particle.
(26) The negative electrode for a nonaqueous electrolyte rechargeable battery according to (25) in which the nanosized particle further includes a twentieth phase which is a compound of the element A - 1 and the element D', and a part or the whole of the twentieth phase is covered with the thirteenth phase.
(27) The negative electrode for a nonaqueous electrolyte rechargeable battery according to (6) above in which the average diameter of the nanosized particles is 2 nm to 500 nm.
(28) A nonaqueous electrolyte rechargeable battery comprising a positive electrode that can absorb and desorb lithium, the negative electrode according to (1) above, and a separator which is disposed between the positive electrode and the negative electrode. The positive electrode, the negative electrode, and the separator are provided in an electrolyte having lithium ion conductivity.

### EFFECTS OF THE INVENTION

The present invention can provide a negative electrode for a large-capacity nonaqueous electrolyte rechargeable battery having good cycle characteristics.

### BRIEF DESCRIPTION OF THE DRAWINGS

FIG. 1 (a), (b) are schematic cross-sectional views of negative electrodes for a nonaqueous electrolyte rechargeable battery 1, 1a according to the present invention.
FIG. 2 (a), (b) are schematic cross-sectional views of granules 7, 7a according to the present invention.
FIG. 3 (a), (b), (c) are schematic cross-sectional views of a first example of nanosized particles according to the first embodiment of the present invention.
FIG. 4 (a), (b) are schematic cross-sectional views of a second example of nanosized particles according to the first embodiment of the present invention.
FIG. 5 (a), (b) are schematic cross-sectional views of a third example of nanosized particles according to the first embodiment of the present invention.
FIG. 6 shows a manufacturing apparatus for nanosized particles according to the present invention.
FIG. 7 (a), (b) are schematic cross-sectional views of nanosized particles according to the second embodiment of the present invention.
FIG. 8 (a), (b), (c) are schematic cross-sectional views of a first example of nanosized particles according to the third embodiment of the present invention.
FIG. 9 (a), (b) are schematic cross-sectional views of a second example of nanosized particles according to the third embodiment of the present invention.
FIG. 10 (a), (b) are schematic cross-sectional views of a third example of nanosized particles according to the third embodiment of the present invention.
FIG. 11 is a schematic cross-sectional view of a fourth example of nanosized particles according to the third embodiment of the present invention.
FIG. 12 (a), (b), (c) are schematic cross-sectional views of a first example of nanosized particles according to the fourth embodiment of the present invention.
FIG. 13 (a), (b) are schematic cross-sectional views of a second example of nanosized particles according to the fourth embodiment of the present invention.
FIG. 14 (a), (b) are schematic cross-sectional views of a third example of nanosized particles according to the fourth embodiment of the present invention.
FIG. 15 (a), (b) are schematic cross-sectional views of a fourth example of nanosized particles according to the fourth embodiment of the present invention.
FIG. 16 shows a cross-sectional view of an example of a nonaqueous electrolyte rechargeable battery according to the present invention.
FIG. 17 (a), (b) are schematic views of nanosized particles according to the present invention before and after charging.
FIG. 18 shows XRD analysis results of nanosized particles in accordance with Example 1-1.
FIG. 19 is a TEM photograph of nanosized particles in accordance with Example 1-1.
FIG. 20 (a) is a HAADF-STEM photograph of nanosized particles in accordance with Example 1-1 and FIG. 20 (b), (c) are EDS maps under the same scope.
FIG. 21 is a SEM photograph of granules in accordance with Example 1-1.
FIG. 22 (a) is a cross-sectional SEM photograph of a negative electrode in accordance with Example 1-1 and FIG. 22 (b) is a photograph of a current collector after 500 cycle of charging and discharging of the negative electrode in accordance with Example 1-1.
FIG. 23 (a) is a cross-sectional SEM photograph of a negative electrode in accordance with Comparison Example 1 and FIG. 23 (b) is a photograph of a current collector after one cycle of charging and discharging of the negative electrode in accordance with Comparison Example 1.
FIG. 24 shows a comparison of the cycle characteristics of Example 1-1, Example 1-2, and Comparison Example 1.
FIG. 25 shows a comparison of the cycle characteristics of Example 2-1, Example 2-2, Example 2-3, and Comparison Example 2.
FIG. 26 is a schematic cross-sectional view of a negative electrode for a conventional nonaqueous electrolyte rechargeable battery.
FIG. 27 (a), (b) are schematic views of conventional active material particles before and after charging.

### DETAILED DESCRIPTION OF THE PREFERRED EMBODIMENTS

### (1. A negative electrode for a nonaqueous electrolyte rechargeable battery)

### (1-1. The structure of a negative electrode for a nonaqueous electrolyte rechargeable battery)

With the reference to the drawings, the preferred embodiments of the present invention will be described in detail below.

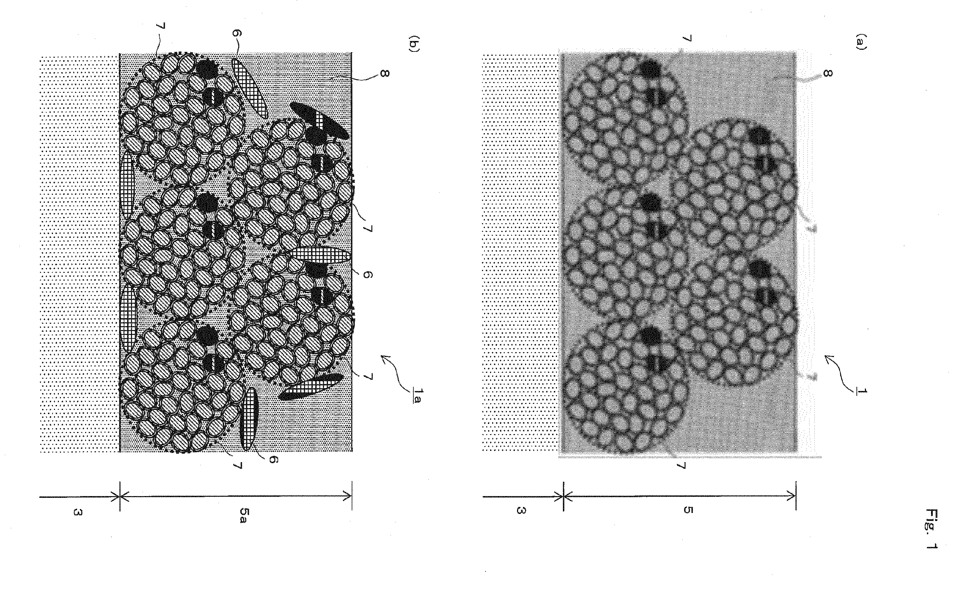

FIG. 1 (a) is a cross-sectional view of a negative electrode for a nonaqueous electrolyte rechargeable battery 1 in accordance with the present invention.

The negative electrode for a nonaqueous electrolyte rechargeable battery 1 has an active material layer 5 on a current collector 3. The active material layer 5 includes granules 7 and coating binder 8.

The coating binder 8 comprises at least one type selected from the group consisting of polyimide, poly benzimidazole, polyamide imide, and polyamide.

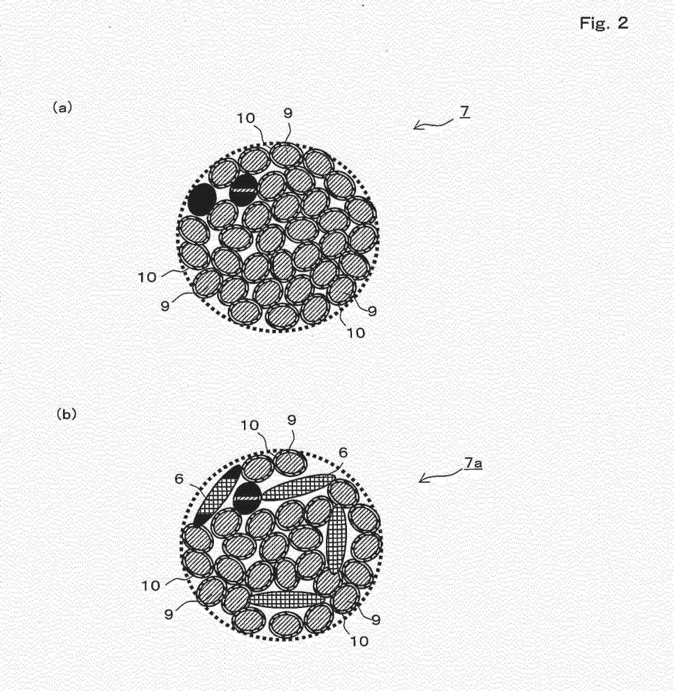

As shown in FIG. 2(a), the granule 7 includes at least active material particles 9, which includes at least one type of an element A selected from the group consisting of Si, Sn, Al, Pb, Sb, Bi, Ge, In and Zn, and a granulation binder 10.

For the active material particles 9, it is preferable, but not limited as long as the active material particle 9 includes the element A, to use nanosized particles 11, 17, 18, 21, 22, 23, 27, 61, 67, 71, 75, 76, 79, 81, 83, 87, 91, 101, 109, 110, 113, 117, 119, 123, 125 or 129 that will be described below. Also, it is preferred that the average particle diameter of the active material particles 9 is from 2 nm to 500 nm. If the average particle diameter is less than 2 nm, handling of the active material particles 9 becomes difficult; and if the average particle diameter is larger than 500 nm, the particle diameter size is too large and the yield stress is not sufficient in many cases.

For the granulation binder 10, it is preferable, but not limited as long as the granulation binder 10 is the binder that can granulate, to use any one or more selected from the group consisting of polyimide, poly benzimidazole, styrene butadiene rubber, polyvinylidene fluoride, carboxyl methyl cellulose and polyacrylic acid. Unlike the coating binder 8, it is not necessary to use a strong adhesive material such as polyimide.

Also, as shown in FIG. 1 (b), in addition to the granules 7 and the coating binder 8, conductive agents 6may be added into the active material layer 5a of a negative electrode for a nonaqueous electrolyte rechargeable battery 1a.

The conductive agent 6 is powder comprising at least one type of an electrically conductive material selected from the group consisting of carbon, copper, tin, zinc, nickel, silver and the like. The conductive agent 6 may be a simple substance powder of carbon, copper, tin, zinc, nickel, or silver, or may be an alloy of each of the metals. For example, carbon black, carbon nanotube, carbon fiber and the like may be used.

Adding the conductive agents 6 improves the electrical conductivity of the active material layer 5a of the negative electrode for a nonaqueous electrolyte rechargeable battery 1a and facilitates charging and discharging.

Also, as shown in FIG. 2 (b), in addtion the active material particles 9 and the granulation binder 10, conductive agents 6 may be added into the granules 7a.

### (1-2. The method for manufacturing the granules)

First, the active material particles 9, the granulation binder 10 and the like are put into a mixer, and then mixed and kneaded to form slurry. The slurry contains 25 % to 90 % by weight of the active material particles, 0 % to 70 % by weight of the conductive agents, and 1 % to 30 % by weight of the binder.

The slurry is then granulated to form the granules 7 by means of a spray dry process, a rolling granulation process, a fluidized bed granulation process, a stirring granulation process, a wet crushing granulation process or the like.

### (1-3. The method for manufacturing the negative electrode for a nonaqueous electrolyte rechargeable battery)

Slurry ingredients are put into a mixer, and mixed and kneaded to form slurry. The slurry ingredients include granules, conductive agents, binder, thicker, solvent, and the like.

It is preferred that the slurry includes, together with the components forming the granules, the solid content of 25 % to 95 % by mass of the active material particles, 0 % to 70 % by mass of the conductive agents, 1 % to 30 % by mass of the binder (total amount of the granulation and coating binder), and 0 % to 25 % of the thicker. Preferably, the ratios of the solid content are 50 % to 95 % by mass for the active material particles, 5 % to 30 % by mass for the conductive agents, and 5 % to 25 % by mass for the binder. The lesser amount of the binder impairs the adhesive property making it difficult for the granules and the electrode to maintain their shapes. Also, the greater amount of the binder reduces the electrical conductivity, causing difficulties in charging and discharging.

A common kneading machine used for preparation of slurry may be used as the mixer. An apparatus that can prepare the slurry such as a kneader, a stirrer, a disperser or a mixer may be used as well. N-methyl-2-pyrrolidone may be used as the solvent.

For the conductive agents, for example, commonly used carbon black, such as furnace black and acetylene black, carbon nanotube, carbon fiber and the like may be used as mentioned above.

Also, it is preferable to add carbon nanohorn as a conductive agent if the element A of the active material particle 9 is silicon having a low conductivity, which is exposed on the surface of the active material particle 9 and impairs the electrical conductivity. Here, the carbon nanohorn (CNH) has a structure of a grapheme sheet rolled up in a shape of a cone, and its actual form of the existence is an aggregation of forms like radial sea urchins in which the vertices of the many CNH are pointing outwardly. The outer diameter of the sea-urchin-like aggregation of CNH is approximately from 50 nm to 250 nm. The average particle diameter of approximately from 80 nm to 150 nm is particularly preferable for CNH.

The average particle diameter of the conductive agent indicates the average particle diameter of the primary particles. Even for the acetylene black (AB) which has a highly developed structured shape, the primary particle diameter can defines the average particle diameter here, and the average particle diameter can be found by SEM photograph image analysis.

Also, both powdery and wire-shaped conductive agents may be used as well. The wire-shaped conductive agent is a wire of an electrically conductive material and any of the conductive materials mentioned for the powdery conductive agents may be used. A streak material such as carbon fiber, carbon nanotube, copper nanowire and nickel nanowire having the outer diameter of 300 nm or less may be used for the wire-shaped conductive agent. The use of the wire-shaped conductive agent facilitates retaining the electrical conductivity with the negative electrode active materials and current collectors, improves the current collectivity, and increases fibrous materials in the porous-film negative electrode which prevents the negative electrode from cracking. For example, it may be considered to use AB or copper powder as the powdery conductive agent, and vapor grown carbon fiber (VGCF) as the wire-shaped conductive agent. It is also possible to use only the wire-shaped conductive agent without adding the powdery conductive agent.

The length of the wire-shaped conductive agent is preferably from 0.1 µm to 2 mm. The outer diameter of the conductive agent is preferably from 2 nm to 500 nm, and more preferably, from 10 nm to 200 nm. It is sufficient to raise the productivity of the conductive agent if the length of the conductive agent is 0.1 µm or more, and it is easy to coat the slurry if the length is 2 mm or less. Also, composition is easy if the outer diameter of the conductive agent is greater than 2 nm, and mixing and kneading of the slurry is easy if the outer diameter of the conductive agent is less than 500 nm. The image analysis by SEM is used to measure the outer diameter and the length of the conductive material.

Next, the slurry is coated on one side of the current collector by using, for example, a coater. A commonly used coating apparatus that can coat slurry on current collectors such as a roll coater, a coater with doctor blades, a comma coater, and a die coater may be used as the coater.

The current collector is foil made of at least one type of a metal selected from the group consisting of copper, nickel, and stainless steel. Each of the metals may be used as a simple substance, or an alloy of each of the metals may be used as well. The thickness of the foil is preferably from 4 µm to 35 µm, and more preferably, from 8 µm to 18 µm.

The prepared slurry is uniformly coated onto the current collector, dried at the temperature of approximately 50 °C to 150 °C, and then set through a roll press to adjust the thickness. After that, at least one type of binder selected from the group consisting of polyimide, polyamide imide, poly benzimidazole, and polyamide is baked at the temperature from 150 °C to 350 °C to obtain the negative electrode for the nonaqueous electrolyte rechargeable battery.

### (1-4. The effects of the negative electrode for the nonaqueous electrolyte rechargeable battery in accordance with the present invention)

In the present invention, the active material particles are granulated into granules and the slurry including the granules is coated to form the active material layer. In this way, the stress applied onto the current collector due to the expansion and contraction of the negative electrode active material is relaxed, and deformation of the current collector due to charging and discharging can be prevented. As a result, the strong binder such as polyimide that can cohere to the current collector can be used as the coating binder and the negative electrode for the nonaqueous electrolyte rechargeable battery in accordance with the present invention has good cycle characteristics.

Since the present invention makes use of the active material particles including the element A such as silicon that has a higher charging-discharging capacity per volume and per weight than carbon, it is possible to obtain a negative electrode for the nonaqueous electrolyte rechargeable battery that has a larger capacity than the conventional ones.

### (2. Nanosized particles in accordance with a first embodiment)

### (2-1. The structure of a nanosized particle)

A nanosized particle 11 in accordance with a first embodiment will be described below.

FIG. 3s are schematic cross-sectional views of the nanosized particle 11. The nanosized particle 11 has a first phase 13 and a second phase 15. The first phase 13 has an approximately spherical surface except for an interface and the second phase 15 is joined to the first phase 13 via the interface. The interface between the first phase 13 and the second phase 15 is a flat or spherical surface. The interface may also be in a step-wise form.

The first phase 13 is a simple substance of the element A, which is at least one type of an element selected from the group consisting of Si, Sn, Al, Pb, Sb, Bi, Ge, In and Zn. The element A is an element that can easily absorb lithium. The first phase 13 may be a solid solution including the element A as a main component. The first phase 13 may be a crystalline material, or may be amorphous. An element that constitutes the solid solution together with the element A may be an element selected from the group provided for the selection of the element A, or may be an element that is not mentioned in the group. The first phase 13 can absorb and desorb lithium. The first phase 13 absorbs lithium once to be alloyed and then desorb lithium to be de-alloyed and become amorphous.

The approximately spherical surface except for the interface means that the surface is not limited to the spherical or elliptical shape, but the surface has a smooth curved surface for the most part and may partly has a flat surface. However, the shape differs from such a shape of a solid body having corners made through a crushing process.

The second phase 15 is a crystalline compound of the element A and an element D. The element D is at least one type of an element selected from the group of Fe, Co, Ni, Ca, Sc, Ti, V, Cr, Mn, Sr, Y, Zr, Nb, Mo, Tc, Ru, Rh, Ba, lanthanoid elements (except for Pm), Hf, Ta, W, Re, Os, and Ir. The element D does not absorb lithium easily and is able to form a compound DAₓ (1 < x <= 3) with the element A. For most of the element A, x equals 2 as in FeSi₂ and CoSi₂, but there are cases where x equals 1.33 as in Rh₃Si₄ (RhSi_{1.33}), x equals 1.5 as in Ru₂Si₃ (RuSi_{1.5}), x equals 1.67 as in Sr₃Si₅ (SrSi_{1.67}), x equals 1.75 as in Mn₄Si₇ (MnSi_{1.75}) and Tc₄Si₇ (TcSi_{1.75}), and x equals 3 as in IrSi₃. The second phase 15 hardly absorbs lithium. Also, other elements such as Tc, Re, or Os may be used as the element D.

When water-based slurry is prepared to coat the nanosized particles, lanthanoid elements are not preferable since lantahoid elements tend to form hydroxide in water-based slurry causing separation between each phase. The nanosized particles containing lanthanoid elements also have a problem of being easily hydrogenated in the plasma during the formation. Nanosized particles containing lanthanoid elements can be used without problems if mixing of moisture into the plasma during the formation is prevented, or organic-solvent-based slurry is prepared.

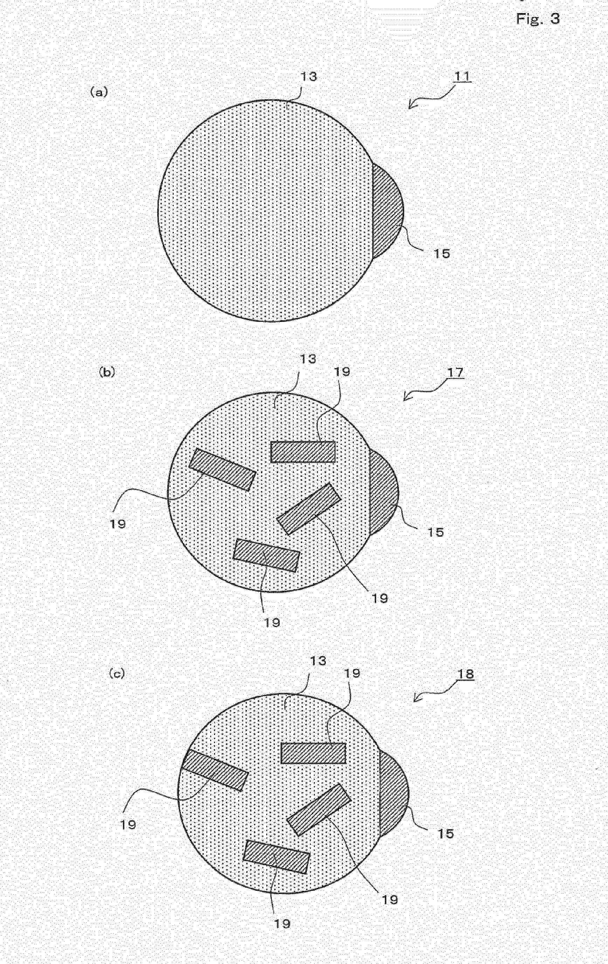

Also, third phases 19 which are compounds of the element A and the element D may be dispersed in the first phase 13 as in a nanosized particle 17 shown in FIG. 3 (b). The third phases 19 are covered with the first phase. The third phase 19, like the second phase 15, hardly absorbs lithium. Also, as shown in FIG. 3 (c), a part of the third phase 19 may be exposed to the surface. That is, the whole of the third phase 19 may not necessarily be covered around by the first phase 13, but only a part of the third phase 19 may be covered.

Although a plurality of the third phases 19 are dispersed in the first phase 13 in FIG. 3 (b), the single third phase 19 may be included.

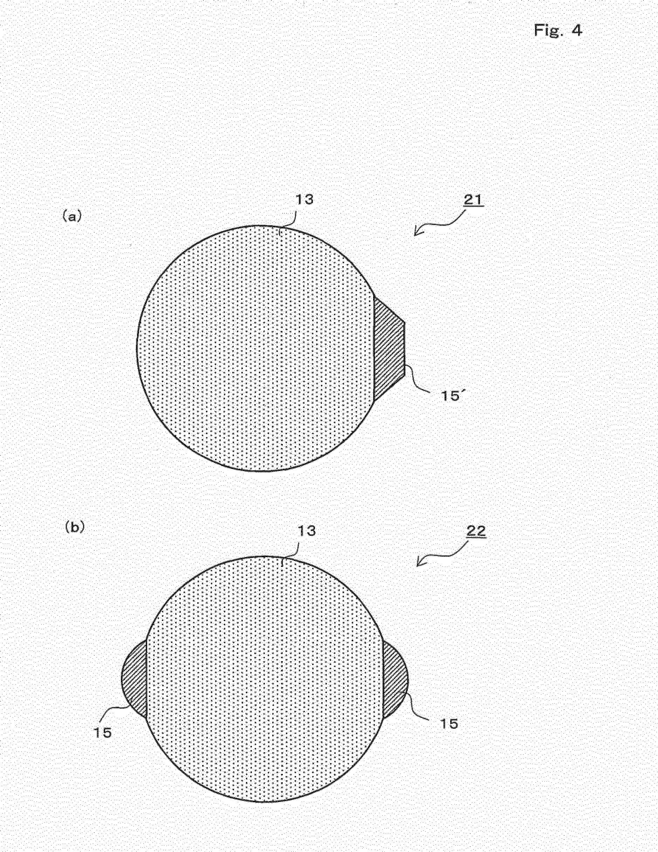

Also, except for the interface, the surface of the second phase 15 may have a smooth and approximately spherical shape as the second phase 15 shown in FIG. 3(a), or may be a polyhedron as the second phase 15' shown in FIG. 4 (a). The second phase 15' becomes a polyhedron under an influence of the stability of crystallization of the compound of the element A and the element D and the like.

Also, as a nanosized particle 22 shown in FIG. 4 (b), a nanosized particle may have a plurality of the second phase 15. For example, less frequency of collision of the elements D with one another in the gas or liquid state, the relation of the melting points and wettability of the first phase 13 and the second phase 15, the influence of the cooling rate, or the like may cause the second phase 15 to be dispersed over the surface of the first phase 13 and joined thereto.

If the nanosized particle has a plurality of the second phases 15 on the first phase 13, the area of the interfaces between the first phase 13 and the second phases 15 increases, which further prevents the expansion and contraction of the first phase 13. Also, if the first phase 13 is Si or Ge, the movement of electrons is promoted since the second phase 15 has higher conductivity than the first phase 13, and each of the nanosized particles 22 has a plurality of current collection spots on the first phase 13. Therefore, the nanosized particle 22 can be a material for negative electrode having a high powdery conductivity, reducing the conduction agents and forming large-capacity negative electrode. Furthermore, a negative electrode that is excellent in high rate characteristics is obtained.

If the element D includes two or more types of elements selected from the group provided for the selection of the element D, the other element D may also be included as a solution or as a compound in the second phase 15 and/or in the third phase 19, which is a compound of one of the element D and the element A. That is, even if the nanosized particle includes two or more types of elements selected from the group provided for the selection of the element D, there is a case that a fourth phase 25 may not be formed like an element D' described below. For example, if the element A is Si, one of the element D is Ni, and the other element D is Fe, Fe may exist in NiSi₂ as a solid solution. Also, when observed under EDS, the distribution of Ni and Fe is approximately the same in some cases, but is different in other cases, and the other element D is uniformly included in the second phase 15 and/or the third phase 19 in some cases, but is included only partially in other cases.

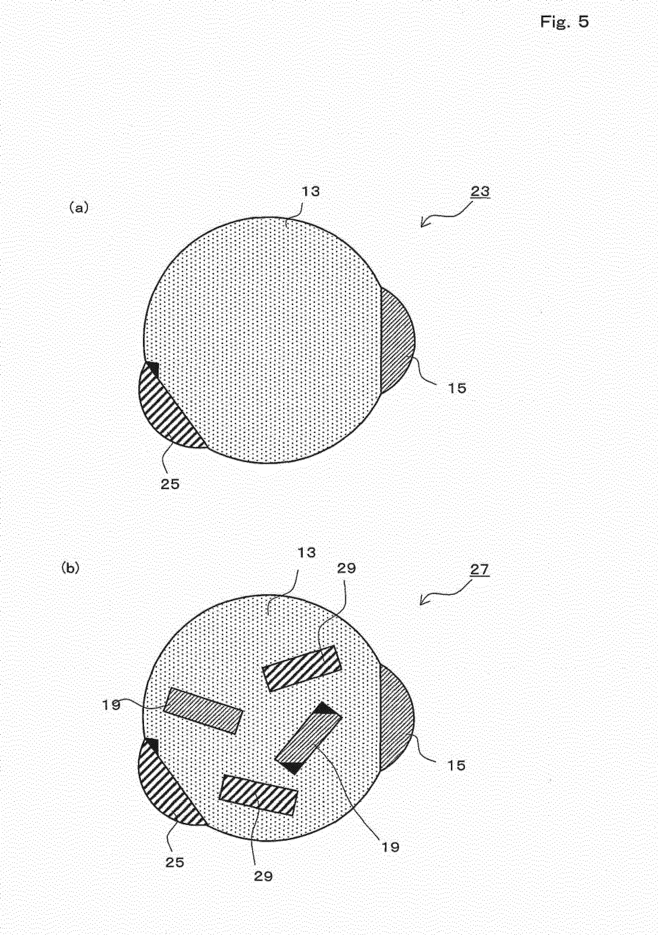

In addition to the element D, the nanosized particle may also include the element D'. The element D' is an element selected from the group provided for the selection of the element D, and the element A, the element D, and the element D' are elements of different types. A nanosized particle 23 shown in FIG. 5 (a) includes the element D and the element D' and has the fourth phase 25, in addition to the second phase 15 which is a compound of the element A and the element D. The fourth phase 25 is a compound of the element A and the element D'. The nanosized particle 23 may include a solid solution (not shown in the drawing) which comprises the element D and the element D'. For example, the second phase 15 may be a compound of Si and Fe, the fourth phase 25 may be a compound of Si and Co, and the solid solution of the element D and the element D' may be the solid solution of Fe and Co.

Also, as shown in FIG. 5 (b), the third phase 19, which is a compound of the element A and the element D, and a fifth phase 29, which is a compound of the element A and the element D', may be dispersed in the first phase 13. Although the FIG. 5 (a) and FIG. 5 (b) show examples of the cases in which two types of elements are selected, three or more elements may be selected as well.

The average diameter of these nanosized particles is preferably from 2 nm to 500 nm, and more preferably, from 50 nm to 300 nm. According to Hall-Petch law, the yield stress increases when the particle size is small so, if the average particle diameter of the nanosized particle is from 2 nm to 500 nm, the particle diameter size is sufficiently small, the yield stress is sufficiently large, and pulverization due to charging and discharging may not easily occur. If the average particle diameter is less than 2 nm, handling of the nanosized particles after composition is difficult, and if the average diameter is more than 500 nm, the particle diameter size is too large and the yield stress is not sufficient.

The atomic ratio of the element D to the sum of the element A and the element D is preferably from 0.01 % to 25 %. If this atomic ratio is from 0.01 % to 25 %, both cycle characteristics and large-capacity can be achieved when the nanosized particle 11 is used as a negative electrode material for the nonaqueous electrolyte rechargeable battery. On the other hand, if the ratio is less than 0.01 %, the volume expansion of the nanosized particle 11 at the time of lithium absorption cannot be suppressed, and if the ratio is over 25 %, then the amount of the element A which combines with the element D increases, resulting in the decrease of the element A sites that are able to absorb lithium and the loss of the advantages of the large-capacity. If the nanosized particle includes the element D', the atomic ratio of the sum of the element D and the element D' to the sum of the element A, the element D, and the element D' is preferably from 0.01 % to 25 %.

In particular, it is preferred that the first phase is mainly crystalline silicon and the second phase is crystalline silicide. Also, adding phosphorus or boron may enhance the conductivity of the silicon. Indium or gallium may be used instead of phosphorus, and arsenic may be used instead of boron. Improving the conductivity of the silicon of the first phase allows the negative electrode using these nanosized particles to have less internal resistance, an increased electrical current, and good high rate characteristics.

Furthermore, adding oxygen to Si of the first phase suppresses Si sites which combines with Li so that the volume expansion due to Li absorption is suppressed and good life-cycle characteristics are obtained. The addition amount of the oxygen y is preferably in the range of SiO_{y} [0 <= y < 0.9]. Under the condition that y is 0.9 or more, Si sites in which Li absorption is possible decrease, causing a decline in the capacity.

Since particulates usually exist as agglomerate, here, the average particle diameter of the nanosized particles indicates the average particle diameter of the primary particles. To measure the particles, image information from an electron microscope (SEM) is used together with volume-based median diameter of a dynamic light scattering photometer (DLS). The average particle diameter can be measured by, first, checking the particle shape from the SEM image, and then finding the particle diameter using an image analyzing software (for example, "A-zou-kun"(registered trademark) by Asahi Kasei Engineering), or dispersing the particles into a solvent and then measuring the particle diameter by a DLS (for example, DLS-8000 by Otsuka Electronics). Almost the same results can be obtained from the SEM and DLS if the particulates are fully dispersed and do not agglomerate. Also, even if the nanosized particle has a highly developed structured shape like acetylene black, the average diameter is defined by the primary particle diameter here and can be measured from the image analysis of SEM photographs. Furthermore, the average particle diameter can also be measured by measuring the specific surface area by BET method and the like and presuming that the particles are spherical. Before adopting this method, it is necessary to check by means of SEM or TEM observations that the nanosized particles are not porous but are solid.

If the first phase is mainly crystalline silicon, oxygen may combine with the outermost surface of the nanosized particles 11. This is because, when the nanosized particles 11 are taken into the air, oxygen in the air reacts with an element on the surface of the nanosized particles 11. That is, the outermost surface of the nanosizedparticles 11 may have an amorphous layer having a thickness of 0.5 nm to 15 nm, and more particularly, if the first phase is mainly crystalline silicon, may have an oxidized film layer. Covering with the amorphous layer makes it possible to gain stabilization in the air and to use water-based solvent for the slurry, which increases the industrial utility value.

### (2-2. The effects of the nanosized particles)

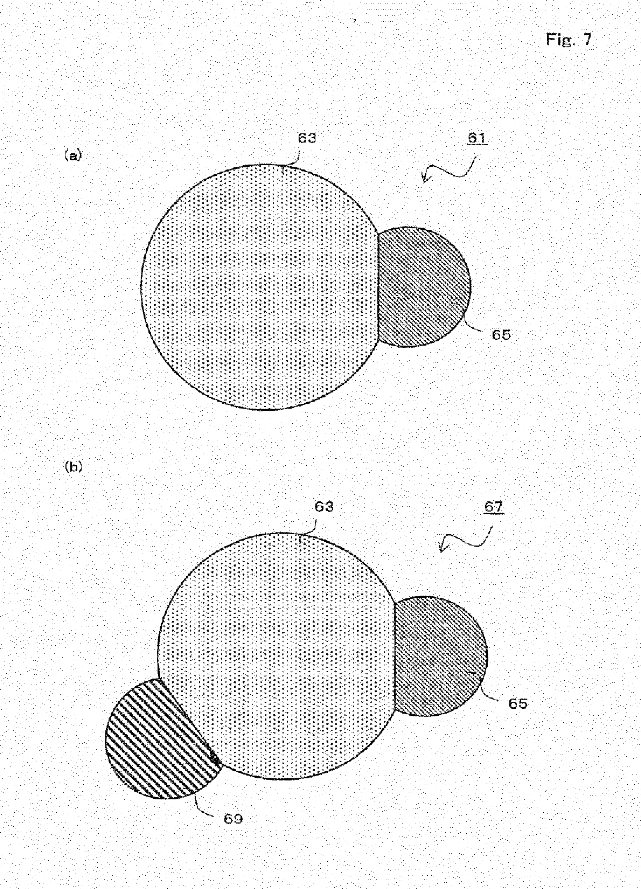

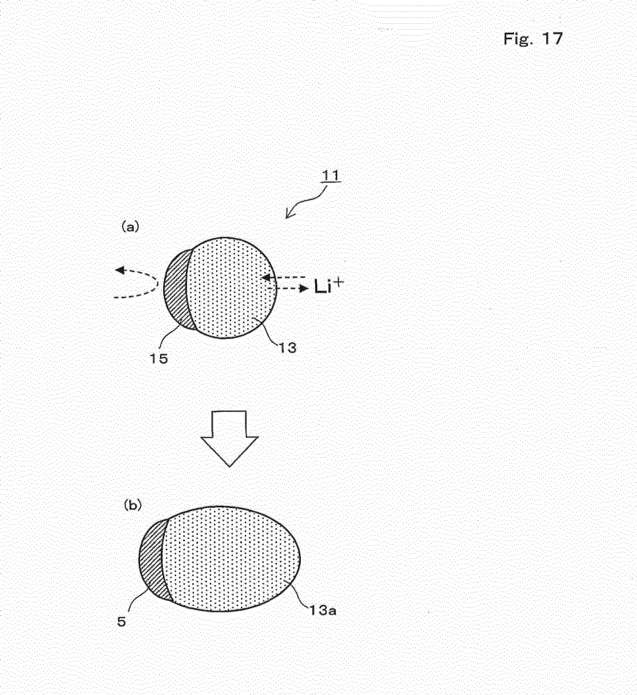

When the first phase 13 absorbs lithium as shown in FIG. 17 (a), the first phase 13 expands in volume. However, because the second phase 15 does not easily absorb lithium, the expansion of the first phase 13, which is in contact with the second phase 15, can be suppressed compared to the case without the second phase 15 as shown in FIG. 7 (b). That is, if the first phase 13 absorbs lithium and tries to expand in volume, since the second phase 15 does not expand easily, the interface between the first phase 13 and the second phase 15 is not slippery, and, therefore, the second phase 15 acts as a wedge or a pin, relaxes the volumetric strain, and prevents the expansion of the nanosized particle as a whole. Therefore, compared to the particle without the second phase 15, the nanosized particle 11 having the second phase 15 does not tend to expand easily when absorbing lithium and can easily return to its original shape with a restoring force when lithium is desorbed. Therefore, according to the present invention, even when the nanosized particle 11 absorbs lithium, the volumetric strain is relaxed and the decline of discharging capacity due to the repetitive charging-discharging can be suppressed.

Also, according to the present invention, since the second phase 15 includes the element D, the second phase 15 has high electrical conductivity. Especially, if the first phase 13 is Si or Ge, the conductivity of the nanosized particle 11 as a whole rises dramatically. Therefore, nanosized particles 11 have a plurality of nano-level current collection spots on each of the nanosized particles 11 and can be the material for a negative electrode having high conductivity even with a small amount of conduction agent, and a large-capacity negative electrode can be made. Furthermore, a negative electrode that is excellent in high rate characteristics is obtained.

Also, the expansion of the first phase 13 can be more effectively suppressed in the nanosized particle 17, which includes the third phase 19 in the first phase 13, and the nanosized particle 27, which includes the third phase 19 and the fifth phase 29, since more part of the first phase 13 is in contact with the phase that does not absorb lithium. As a result, it is possible to suppress the volume expansion effectively with a small quantity of the element D in the nanosized particle 17, 18, and 27 and to increase the quantity of the element A, which can absorb lithium, so that the large-capacity and the cycle characteristics are improved.

The nanosized particle 23 and 27 that comprise both the second phase 15 and the fourth phase 25 have the same effect as the nanosized particle 11, and moreover, nano-level current collection spots increase and the current collectivity improves dramatically. It is preferable to add two or more types of D element because two or more compounds, which are easily separable from each other, are formed allowing the current collection spots to increase easily.

### (2-3. The method for manufacturing the nanosized particles)

The manufacturing method of these nanosized particles will be described below. These nanosized particles are synthesized by vapor phase synthesis. More specifically, these nanosized particles can be manufactured by generating plasma of the ingredient powder which is then heated up to about 10,000 K and cooled. There are several methods to generate plasma: (1) a method to heat the gas inductively using a high frequency electromagnetic field (2) a method to use arc discharge between electrodes (3) a method to heat the gas with microwave and the like; and any of the methods may be used.

That is, since the element D is an element which forms a compound with the element A, when the plasma of the ingredient powder is generated and then cooled, a part of the element A forms a compound with the element D and the rest of the element A deposits as a simple substance or a solid solution. Therefore, the so to speak daruma-doll shaped nanosized particle 11 in which the first phase, which is a single substance or a solid solution of the element A, joins with the second phase, which is a compound of the element A and the element D, via an interface can be obtained.

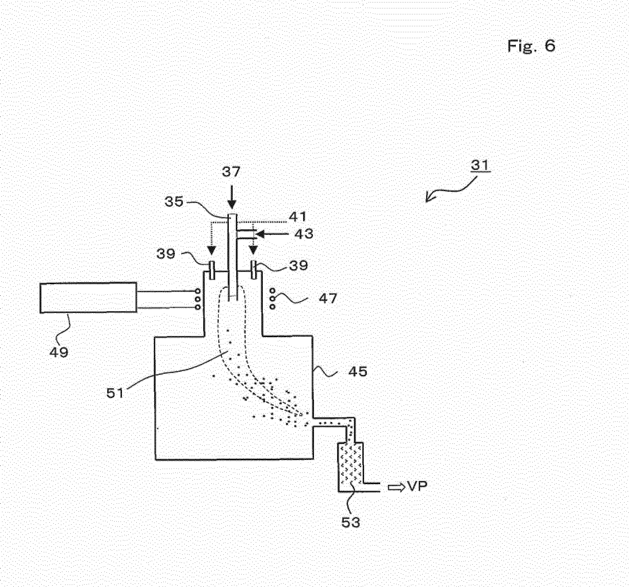

As an example of the manufacturing apparatus of the nanosized particles, (1) a method in which gas is heated inductively by using high frequency electromagnetic field will be described with reference to FIG. 6. A nanosized particle manufacturing apparatus 31 shown in FIG. 6 has a high frequency coil 47 for generating plasma, which is wound around the upper outer wall of a reaction chamber 45. Alternative current of several MHz is applied onto the high frequency coil 47 from a high frequency power source 49. The preferred frequency is 4 MHz. The upper outer wall around which the high frequency coil 47 is wound is a cylindrical double-tube pipe made of quartz glass and the like, and cooling water is allowed to flow in the gap of the tubes to prevent the quartz glass from melting.

Also, on the upper part of the reaction chamber 45, a sheath gas supply opening 39 is provided together with an ingredient powder supply opening 35. Ingredient powder 37, together with carrier gas 43 (rare gas such as helium or argon), is supplied from an ingredient powder feeder through the ingredient powder supply opening 35 into plasma 51. Also, sheath gas 41 is supplied through the sheath gas supply opening 39 to the reaction chamber 45. The sheath gas 41 is mixed gas of argon gas and oxygen gas or the like. It is not necessary to provide the ingredient powder supply opening 35 above the plasma 51 as shown in FIG. 6, and a nozzle may be provided at the side of the plasma 51 in a horizontal direction. Also, the ingredient powder supply opening 35 may be cooled with cooling water. The property of the nanosized particle ingredient that is to be supplied to plasma is not limited to powder, and slurry of the ingredient powder or gaseous ingredient may also be supplied.

The reaction chamber 45 maintains the pressure of the plasma reaction part and prevents dispersion of the manufactured fine powder. The reaction chamber 45 is also cooled by water to prevent damages caused by plasma. Also, the reaction chamber 45 has a suction tube joined at the side, and a filter 53 that collects the synthesized fine powder is provided in the middle of the suction pipe. The suction pipe that connects the filter 53 from the reaction chamber 45 is also cooled by cooling water. The pressure in the reaction chamber 45 is controlled by the suction capacity of the vacuum pump (VP) provided at the lower side of the filter 53.

Since the manufacturing method of the nanosized particle 11 is a bottom-up method in which the nanosized particle 11 deposits from plasma through gas and liquid to a solid, a particle becomes spherical at the droplet stage to form the spherical shaped nanosized particle 11. On the other hand, particles manufactured from a top-down method such as a crushing method or a mechanochemical method, which makes a large particle smaller, have distorted and rough shapes which differ greatly from the spherical shape of the nanosized particle 11.

If mixed powder of the element A powder and the element D powder is used as the ingredient powder, the nanosized particles 11, 17, 18, 21, and 22 can be obtained. Also, if mixed powder of each powder of the element A, the element D, and the element D' is used as the ingredient powder, the nanosized particles 23 and 27 are obtained. Furthermore, when oxygen is introduced into the first phase 13, for example, introducing the element A and its oxide AO₂ and the like such as Si and SiO₂ can easily control the composition ratio.

### (3. Nanosized particles in accordance with a second embodiment)

### (3-1. The structure of a nanosized particle 61)

A nanosized particle 61 in accordance with a second embodiment will be described.

FIG. 7(a) is a schematic cross-sectional view of a nanosized particle 61. The nanosized particle 61 has the sixth phase 63 and the seventh phase 65. The sixth phase 63 and the seventh phase 65 are both exposed to the outer surface of the nanosized particle 61. The sixth phase 63 and the seventh phase 65 are joined via an interface which is a flat or curved surface and have approximately spherical surfaces except for the interface.

The sixth phase 63 is a simple substance or a solid solution of the element A, which is at least one type of an element selected from the group consisting of Si, Sn, Al, Pb, Sb, Bi, Ge, In, and Zn. The element A is an element that can easily absorb lithium. The element that forma a solid solution with the element A may be an element selected from the group provided for the selection of A or an element that is not mentioned in the group. The sixth phase 63 can absorb and desorb lithium.

The approximately spherical surface except for the interface between the sixth phase 63 and the seventh phase 65 means that the sixth phase 63 and the seventh phase 65 have spherical or elliptical shapes except for the interface where the sixth phase 63 and the seventh phase 65 meet. In other words, the sixth phase 64 and the seventh phase 65 have approximately smooth curved surfaces except for the part where the sixth phase 63 and the seventh phase 65 meet. The shapes of the sixth phase 63 and the seventh phase 65 differ from the shapes of a solid and the like formed by crushing method and having corners on the surface. Also, the interface shape of the joining part of the sixth phase 63 and the seventh phase 65 is circular or elliptical.

The seventh phase 65 is crystalline, and is either a compound of the element A and an element M, or a simple substance or a solid solution of the element M. The element M is at least one type of an element selected from the group consisting of Cu, Ag, and Au. The element M does not absorb lithium easily and the seventh phase 65 hardly absorbs lithium.

If the combination of the element A and the element M is capable of forming a compound, the seventh phase 65 is formed by MAₓ (x <= 1, 3 < x) which is a compound of the element A and the element M. However, if the combination of the element A and the element M cannot form a compound, the seventh phase 65 is a simple substance or a solid solution of the element M.

For example, if the element A is Si and the element M is Cu, the seventh phase 65 is formed by copper silicide which is a compound of the element A and the element M.

For example, if the element A is Si and the element M is Ag or Au, the seventh phase 65 is formed by a simple substance of the element M or a solid solution of the element M as the main component.

In particular, it is preferable that the sixth phase 63 is crystalline silicon. It is also preferred that the sixth phase 63 is silicon added with phosphorous or boron. Addition of phosphorous or boron can enhance the conductivity of silicon. Indium or gallium may be used instead of phosphorus, and arsenic may be used instead of boron. Improving the conductivity of the silicon of the sixth phase 63 allows the negative electrode using these nanosized particles to have less internal resistance, an increased electrical current, and good high rate characteristics. Also, the sixth phase 63 can suppress the lithium reaction site by including oxygen. The capacity decreases when oxygen is included, but the volumetric expansion due to lithium absorption can be suppressed. The addition amount z of oxygen is preferably in the range of AO_{z} (0 < z < 1). If z is more than 1, lithium absorption site of A is suppressed causing a decrease in capacity.

The average particle diameter of the nanosized particle 61 is preferably from 2 nm to 500 nm, and more preferably, from 50 nm to 200 nm. According to Hall-Petch law, the yield stress increases when the particle size is small so, if the average particle diameter of the nanosized particle 61 is from 2nm to 500 nm, the particle diameter size is sufficiently small, the yield stress is sufficiently large, and pulverization due to charging and discharging may not easily occur. If the average particle diameter is less than 2 nm, handling of the nanosized particles after composition is difficult, and if the average diameter is more than 500 nm, the particle diameter size is too large and the yield stress is not sufficient.

The atomic ratio of the element M to the sum of the element A and the element M is preferably from 0.01 % to 60 %. If this atomic ratio is from 0.01 % to 60 %, both cycle characteristics and large-capacity can be achieved when the nanosized particle 61 is used as a negative electrode material for the nonaqueous electrolyte rechargeable battery. On the other hand, if the ratio is less than 0.01 %, the volume expansion of the nanosized particle at the time of lithium absorption cannot be suppressed, and if the ratio is over 60 %, the advantages of the large-capacity are lost.

The nanosized particle 61 in accordance with the second embodiment may have an eighth phase 69 as a nanosized particle 67 shown in FIG. 7 (b). The nanosized particle 67 further includes an element M' which is selected from the group consisting of Cu, Ag, and Au, and the element M' is different from the element M. The eighth phase 69 is either a compound of the element A and the element M', or a simple substance or a solid solution of the element M'. The nanosized particle 67 is an example in which the element A is Si, the element M is Cu, the element M' is Ag, the sixth phase 63 is a simple substance or a solid solution of silicon, the seventh phase 65 is copper silicide, and the eighth phase 69 is a simple substance or a solid solution of silver.

The sixth phase 63, the seventh phase 65, and the eighth phase 69 are all exposed to the outer surface, and the sixth phase 63, the seventh phase 65, and the eighth phase 69 are approximately spherical except for the interfaces. For example, the nanosized particle 67 looks like a water molecule wherein small spherical shapes of the seventh phase 65 and the eighth phase 69 are joined to the surface of a large spherical shape of the sixth phase 63. Also, the atomic ratio of the sum of the element M and the element M' to the sum of the element A, the element M, and the element M' is preferably from 0.01 % to 60 %.

If the sixth phase is mainly crystalline silicon, oxygen may combine with the outermost surface of the nanosized particles 61. This is because, when the nanosized particles 11 are taken into the air, oxygen in the air reacts with an element on the surface of the nanosized particles 61. That is, the outermost surface of the nanosized particles 61 may have an amorphous oxidized film having a thickness of 0.5 nm to 15 nm. Introducing oxygen in the range of AO_{z} (0 < z < 1) to the sixth phase 63 makes it possible to gain stabilization in the air and to use water-based solvent for the slurry, which increases the industrial utility value.

### (3-2. The effects of the second embodiment)

According to the second embodiment, the sixth phase 63 expands in volume when the sixth phase 63 absorbs lithium. However, because the seventh phase 65 does not absorb lithium, the expansion of part of the sixth phase 63, which is in contact with the seventh phase 65, can be suppressed. That is, if the sixth phase 63 absorbs lithium and tries to expand in volume, since the seventh phase 65 does not expand easily, the interface between the sixth phase 63 and the seventh phase 65 is not slippery, and the seventh phase 65 acts as a wedge or a pin, relaxes the volumetric strain, and prevents the expansion of the nanosized particle as a whole. Therefore, compared to the particle without the seventh phase 65, the nanosized particle 61 having the seventh phase 65 has fewer tendencies to expand when absorbing lithium and can easily return to its original shape with a restoring force when lithium is desorbed. Therefore, according to the second embodiment, even when the nanosized particle 61 absorbs lithium, the volume expansion is suppressed and the decline of discharging capacity due to the repetitive charging-discharging can be suppressed.

Also, according to the second embodiment, since the seventh phase 65 includes the element M, the seventh phase 65 has higher electrical conductivity than the sixth phase 63. Therefore, nanosized particles 61 have a plurality of nano-level current collection spots on each of the nanosized particles 61 and can be the high conductive material for a negative electrod, and a negative electrode that is excellent in current collectivity can be obtained.

The nanosized particle 67 comprising both the seventh phase 65 and the eighth phase 69 has the same effect as the nanosized particle 61, and moreover, nano-level current collection spots increase and the current collectivity improves dramatically.

### (4. The third embodiment)

### (4-1. The structure of a nanosized particle 71)

A nanosized particle 71 in accordance with a third embodiment will be described. In the embodiment below, same numerals will be given to the elements that have the same aspects as in the second embodiment and redundant description will be avoided.

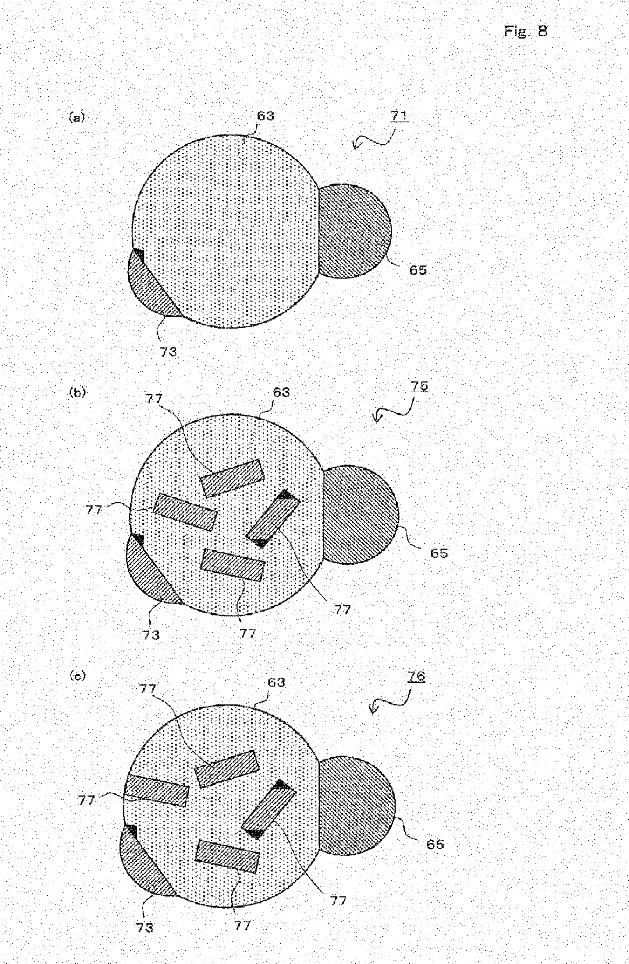

FIG. 8 (a) is a schematic cross-sectional view of a nanosized particle 71. The nanosized particle 71 has the sixth phase 63, the seventh phase 65, and the ninth phase 73. The sixth phase 63 and the seventh phase 65 are joined via an interface, and the sixth phase 63 and the ninth phase 73 are joined via an interface. Also, the sixth phase 63, the seventh phase 65, and the ninth phase 73 are exposed to the outer surface of the nanosized particle 71, and the sixth phase 63, the seventh phase 65, and the ninth phase 73 have approximately spherical surfaces except for the interfaces.

The ninth phase 73 is a crystalline compound of the element A and the element D and has high conductivity. The element D is at least one type of an element selected from the group consisting of Fe, Co, Ni, Ca, Sc, Ti, V, Cr, Mn, Sr, Y, Zr, Nb, Mo, Tc, Ru, Rh, Ba, lanthanoid elements (except for Pm), Hf, Ta, W, Re, Os, and Ir. The element D is an element that does not absorb lithium easily and can form a compound DA_{y} (1 < y <= 3) with the element A. The ninth phase 73 hardly absorbs lithium or may absorb only a few.

The atomic ratio of the element D to the sum of the element A and the element D is preferably from 0.01 % to 25 %. If this atomic ratio is from 0.01 % to 25 %, both cycle characteristics and large-capacity can be achieved when the nanosized particle is used as a negative electrode material for the nonaqueous electrolyte rechargeable battery. On the other hand, if the ratio is below 0.01 %, the expansion of the volume of the nanosized particle at the time of lithium absorption cannot be suppressed, and if the ratio is over 25 %, then the amount of the element D which combines with the element A increases, resulting in the decrease of the element A sites that are able to absorb lithium, and the advantages of the large-capacity are lost. If the nanosized particle includes the element D' as described below, the atomic ratio of the sum of the element D and the element D' to the sum of the element A, the element D, and the element D' is preferably from 0.01 % to 25 %.

Also, the nanosized particle 71 in accordance with the third embodiment may have tenth phases 77 which are compounds of the element A and the element D and are dispersed in the sixth phase 63 as a nanosized particle 77 shown in FIG. 8 (b). The tenth phases 77 are covered with the sixth phase 63. The tenth phase 77, like the seventh phase 65, hardly absorbs lithium, or may absorb only a few.

Although a plurality of the tenth phases 77 are dispersed in the sixth phase 63 in FIG. 8 (b), the single tenth phase 77 may be included.

Also, as a nanosized particle 76 shown in FIG. 8 (c), a part of the tenth phase 77 may be exposed to the surface. That is, it is not necessary to cover whole of the tenth phase 77 with the sixth phase 63 but only a part of the tenth phase 77 may be covered.

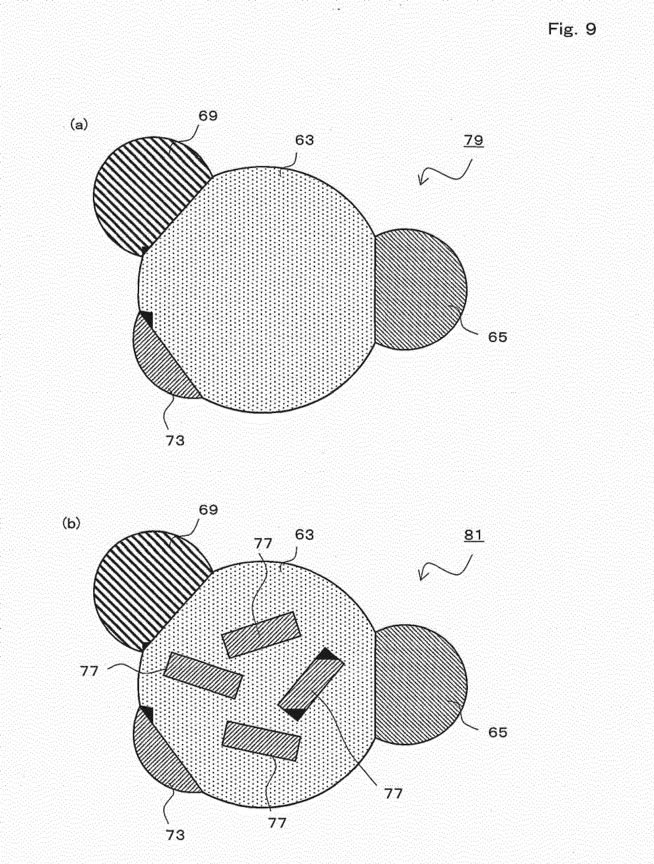

Also, the nanosized particles 71 and 75 may include the eighth phase 69 as a nanosized particle 79 shown in FIG. 9 (a) or as a nanosized particle 81 shown in FIG. 9 (b). The nanosized particles 79 and 81 further include the element M' selected from the group consisting of Cu, Ag, and Au. The element M' is different from the element M. The eighth phase 69 is either a compound of the element A and the element M', or a simple substance or a solid solution of the element M'.

If the element D includes two or more types of elements selected from the group provided for the selection of the element D, the other element D may also be included as a solution or as a compound in the ninth phase 73 and/or in the tenth phase 77, which is a compound of one of the elements D and the element A. That is, even if the nanosized particle includes two or more types of elements selected from the group provided for the selection of the element D, there is a case that an eleventh phase 85 may not be formed like an element D' described below. For example, if the element A is Si, one of the elements D is Ni, and the other element D is Fe, there is a case that Fe exists in NiSi₂ as a solid solution. Also, when observed under EDS, the distribution of Ni and Fe is approximately the same in some cases, but is different in other cases, and the other element D is uniformly included in the ninth phase 73 and/or the tenth phase 77 in some cases, but in other cases, is included only partially.

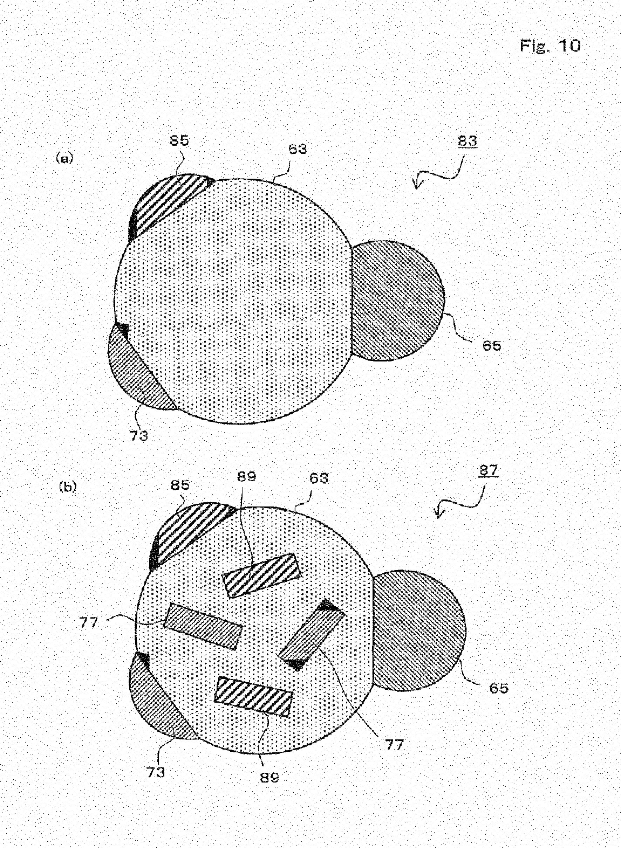

Also, the nanosized particle 71 in accordance with the third embodiment may include the element D and the element D,' and has an eleventh phase 85 that is joined to the sixth phase 63 as a nanosized particle 83 shown in FIG. 10 (a). The eleventh phase 85 is a compound of the element A and the element D'. The eleventh phase 85 is joined to the sixth phase 63 via an interface and is exposed to the outer surface. For example, if the element A is silicon, the element D is iron, and the element D' is cobalt, the sixth phase 63 is a single substance or a solid solution of silicon, the ninth phase 73 is iron silicide, and the eleventh phase 85 is cobalt silicide. In this case, a solid solution of iron and cobalt may be formed in the sixth phase 63.

The element D' is an element selected from the group consisting of Fe, Co, Ni, Ca, Sc, Ti, V, Cr, Mn, Sr, Y, Zr, Nb, Mo, Tc, Ru, Rh, Ba, lanthanoid elements (except for Pm), Hf, Ta, W, Re, Os, and Ir, and is different from the element D.

Also, the nanosized particle 83 in accordance with the third embodiment may include the element D and the element D' as a nanosized particle 87 shown in FIG. 10 (b), and the tenth phases 77, which are compounds of the element A and the element D, and twelfth phases 89, which are compounds of the element A and the element D', may be dispersed in the sixth phase 63. The twelfth phases 89 are covered with the sixth phase 63. The twelfth phases 89, like the eleventh phase 85, hardly absorbs lithium, or may absorb only a few.

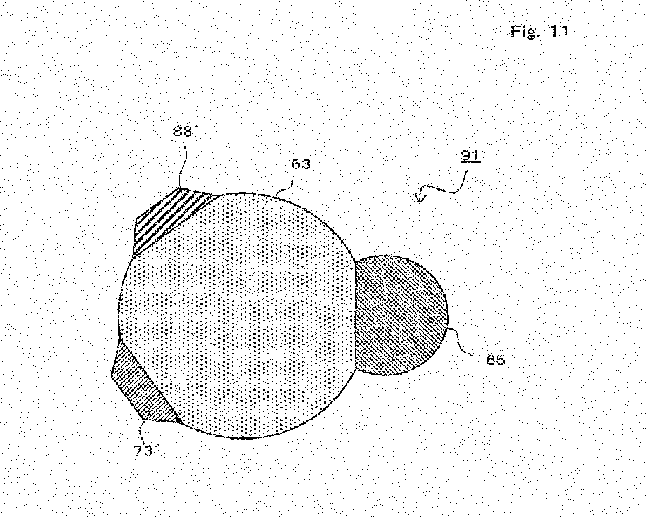

Also, the surface of the ninth phase 73 and the eleventh phase 85 except for the interfaces may have approximately smooth spherical shapes as the ninth phase 73 shown in FIG. 8 (a) and the eleventh phase 85 shown in FIG. 10 (a), or may be polyhedron as the ninth phase 73' and the eleventh phase 85' of a nanosized particle 91 shown in FIG. 11. The ninth phase 73' and the eleventh phase 85' become polyhedron due to the influence of crystallization of the compound of the element A and the element D.

There are cases that a plurality of nanosized particles combine via the the ninth phase 73 or the eleventh phase 85 to form a joined body. Also, there are cases that a part of the nanosized particles separates from the composite body of the combined nanosized particles and the joined part becomes polyhedron.

### (4-2. The effects of the third embodiment)

According to the third embodiment, in addition to the effects that can be obtained from the second embodiment, the nanosized particle 71 does not easily pulverize when lithium is absorbed. In the third embodiment, the sixth phase 63 expands in volume when lithium is absorbed. However, since the seventh phase 65 and the ninth phase 73 hardly absorb lithium, the expansion of the sixth phase 63 which is in contact with the seventh phase 65 and the ninth phase 73 can be suppressed. That is, if the sixth phase 63 absorbs lithium and tries to expand in volume, since the seventh phase 65 and the ninth phase 73 do not expand easily, the interface between the sixth phase 63 and the seventh phase 65 or the ninth phase 73 is not slippery, and the seventh phase 65 and the ninth phase 73 act as wedges or pins, relax the volumetric strain, and prevent the expansion of the nanosized particle as a whole. Therefore, compared to the particle without the ninth phase 73, the nanosized particle 71 having the ninth phase 73 has fewer tendencies to expand when absorbing lithium and can easily return to its original shape with a restoring force when lithium is desorbed. Therefore, even if the nanosized particle 71 absorbs and desorbs lithium, the strain due to volumetric expansion is relaxed and the decline of discharging capacity due to the repetitive charging-discharging can be suppressed.

Also, since most part of the sixth phase 63 of the nanosized particle 75 and the nanosized particle 81 including the tenth phase 77 in the sixth phase 63 is in contact with the phases that does not absorb lithium, the expansion of the sixth phase 63 can be suppressed more effectively with less amount of the tenth phase 77. As a result, even when the nanosized particle 75 and 81 absorb lithium, the volumetric expansion is suppressed and the decline of discharging capacity due to the repetitive charging-discharging can be suppressed.

The nanosized particle 79 and the nanosized particle 81 comprising both the seventh phase 65 and the eighth phase 69 have the same effects as the nanosized particle 61, and furthermore, nano-level current collection spots increase and the current collectivity improves effectively. Therefore, the high-rate characteristics are improved.

Similarly, the nanosized particle 83 and the nanosized particle 87 comprising both the ninth phase 73 and the eleventh phase 85 have the same effects as the nanosized particle 61, and furthermore, nano-level current collection spots increase and the current collectivity improves effectively. Therefore, the high-rate characteristics are improved.

Also, since most part of the sixth phase 63 of the nanosized particle 87 that includes the tenth phase 77 and the twelfth phase 89 in the sixth phase 63 is in contact with the phases that does not absorb, or only absorbs a few lithium, the expansion of the sixth phase 63 can be suppressed further. As a result, the decline of discharging capacity due to the repetitive charging-discharging can be suppressed for the nanosized particle 87 and the high-rate characteristics are improved.

### (5. The method for manufacturing the nanosized particles in accordance with the second and the third embodiment)

The manufacturing method for the nanosized particles according to the present invention will be described. The nanosized particles according to the present invention are synthesized by vapor phase synthesis. More specifically, the nanosized particles can be manufactured by generating plasma of the ingredient powder which is then heated up to about 10,000 K and cooled. There are several methods to generate plasma: (1) a method to heat the gas inductively using a high frequency electromagnetic field (2) a method to use arc discharge between electrodes (3) a method to heat the gas with microwave and the like; and any of the methods may be used.

That is, if the element M is an element that forms a compound with the element A, when the plasma of the ingredient powder is generated and then cooled, a part of the element A forms a compound with the element M and the rest of the element A deposits as a simple substance or a solid solution. Also, if the element M is an element that does not form a compound with the element A, the element M and the element A deposit separately as a simple substance or a solid solution when plasma of the ingredient powder is generated and cooled. Therefore, the so to speak daruma-doll shaped nanosized particle 61 in which the sixth phase, which is a single substance or a solid solution of the element A, joins with the seventh phase, which is either a compound of the element A and the element M, or a simple substance or a solid solution of the element M, via an interface can be obtained.

An example of the manufacturing apparatus for manufacturing the nanosized particles is the nanosized particle manufacturing apparatus 31 shown in FIG. 6.

Since the manufacturing method of the nanosized particles is a bottom-up method in which the nanosized particle deposits from plasma through gas and liquid to a solid, a particle becomes spherical at the droplet stage, and the sixth phase 63 and the seventh phase 65 are formed in spherical shapes. On the other hand, particles manufactured from a top-down method such as a crushing method or a mechanochemical method, which makes a large particle smaller, have distorted and rough shapes which differ greatly from the spherical shape of the nanosized particle 61.

After that, the manufactured nanosized particles are heated in the atmosphere to promote the oxidization of the nanosized particles. For example, heating for an hour at 250°C in the atmosphere can oxidize and stabilize the nanosized particles. Also, by introducing oxygen intentionally into the sixth phase as AO_{z} (0 < Z < 1), the initial capacity can be suppressed as well as the long-life characteristics can be improved. For example, introducing Si as the element A and its oxide SiO2 can control the composition ratio easily.

If mixed powder of the element A powder and the element M powder is used for the ingredient powder, the nanosized particle 61 in accordance with the second embodiment can be obtained. On the other hand, if mixed powder of each powder of the element A, the element M, and the element D is used for the ingredient powder, the nanosized particle 71 in accordance with the third embodiment can be obtained. Also, if mixed powder of each powder of the element A, the element M, the element M', and the element D is used for the ingredient powder, the nanosized particle 79 in accordance with the third embodiment can be obtained. Also, if mixed powder of each powder of the element A, the element M, the element D, and the element D' is used for the ingredient powder, the nanosized particle 83 in accordance with the third embodiment can be obtained.

### (6. Nanosized particles in accordance with a fourth embodiment)

### (6-1. The structure of nanosized particles in accordance with a fourth embodiment)

A nanosized particle 101 in accordance with a fourth embodiment will be described.

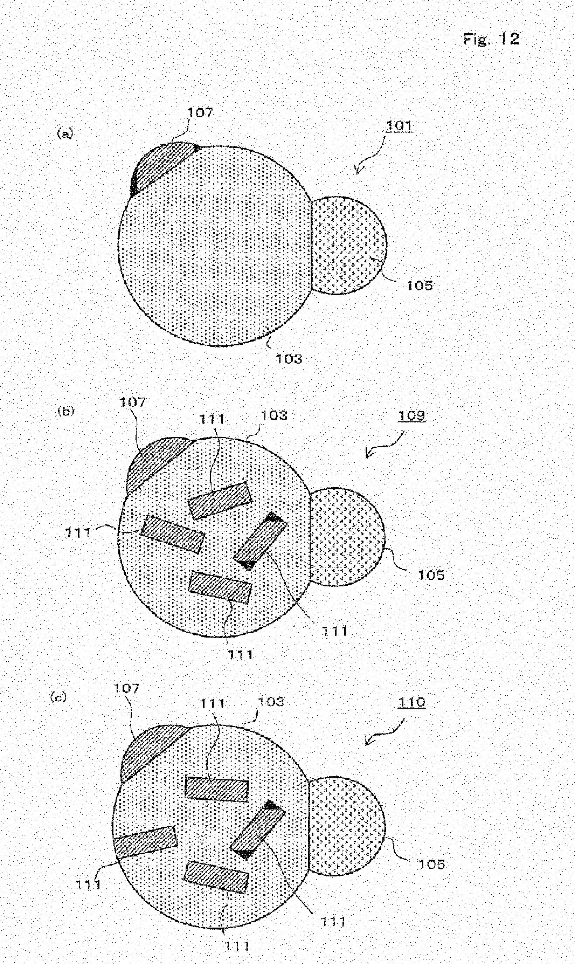

FIG. 12 (a) is a schematic cross-sectional view of a nanosized particle 101. The nanosized particle 101 has a thirteenth phase 103, a fourteenth phase 105, and a fifteenth phase 107, and the thirteenth phase 103, the fourteenth phase 105, and the fifteenth phase 107 are exposed to the outer surface of the nanosized particle 101. The outer surfaces of the thirteenth phase 103, the fourteenth phase 105, and the fifteenth phase 107 are approximately spherical except for interfaces. The thirteenth phase 103 and the fourteenth phase 105 are joined via an interface, and the thirteenth phase 103 and the fifteenth phase 107 are joined via an interface.

The thirteenth phase 103 is a simple substance of an element A - 1, which is one type of an element selected from the group consisting of Si, Sn, Al, Pb, Sb, Bi, Ge, In, and Zn. The element A - 1 is an element that absorbs lithium easily. The thirteenth phase 103 may be a solid solution comprising the element A - 1 as a main component. The element that forms the solid solution with the element A - 1 may be an element selected from the group provided for the selection of A - 1 or an element that is not mentioned in the group. The thirteenth phase 103 can absorb and desorb lithium. The interface between the thirteenth phase 103 and the fourteenth phase 105 is a flat or curved surface. The interface between the thirteenth phase 103 and the fifteenth phase 107 is a flat or curved surface. Also, the fourteenth phase 105 and the fifteenth phase 107 may be joined via an interface.

The approximately spherical outer surface except for the interface between the thirteenth phase 103 and the fourteenth phase 105 means that the thirteenth phase 103 and the fourteenth phase 105 have spherical or elliptical shapes except for the part where the thirteenth phase 103 and the fourteenth phase 105 meet. In other words, the surface of the thirteenth phase 103 and the fourteenth phase 105 has approximately smooth curved surfaces except for the part where the thirteenth phase 103 and the fourteenth phase 105 meet. The shapes of the thirteenth phase 103 and the fourteenth phase 105 differ from the shapes of a solid and the like, that is formed by crushing method and has corners on the surface. The same can be said for the fifteenth phase 107. Also, the interface shape of the joining part of the thirteenth phase 103 and the fourteenth phase 105 or the interface shape of the joining part of the thirteenth phase 103 and the fifteenth phase 107 is circular or elliptical.

The fourteenth phase 105 is a simple substance or a solid solution of one type of an element A - 2. The element A - 2 is an element selected from the group consisting of Si, Sn, Al, Pb, Sb, Bi, Ge, In, and Zn and is different from the element A - 1. The element A - 2 can absorb and desorb Li.

Also, it is preferable that the thirteenth phase 103 is silicon added with phosphorous or boron. Adding phosphorous or boron can improve the conductivity of silicon. Indium or gallium may be used instead of phosphorus, and arsenic may be used instead of boron. Improving the conductivity of the silicon of the thirteenth phase 103 allows the negative electrode using these nanosized particles to have less internal resistance, an increased electrical current, and good high rate characteristics. Also, the thirteenth phase 103 can suppress the lithium reaction sites by including oxygen. The capacity decreases when oxygen is included, but the volumetric expansion due to lithium absorption can be suppressed. The addition amount z of oxygen is preferably in the range of AO_{z} (0 < z < 1). If z is 1 or more, lithium absorption sites of A are suppressed causing a decrease in capacity.

The fifteenth phase 107 is a crystalline compound of the element A - 1 and an element D. The element D is at least one type of an element selected from the group consisting of Fe, Co, Ni, Ca, Sc, Ti, V, Cr, Mn, Sr, Y, Zr, Nb, Mo, Tc, Ru, Rh, Ba, lanthanoid elements (except for Pm), Hf, Ta, W, Re, Os, and Ir. The element D does not absorb lithium easily and is able to form a compound D(A - 1)ₓ (1 < x <= 3) with the element A - 1. For most of the element A-1, x equals 2 as in FeSi₂ and CoSi_{2,} but there are cases where x equals 1.33 as in Rh₃Si₄ (RhSi_{1.33}), x equals 1.5 as in Ru₂Si₃ (RuSi_{1.5}), x equals 1.67 as in Sr₃Si₅ (SrSi_{1.67}), x equals 1.75 as in Mn₄Si₇ (MnSi_{1.75}) and Tc₄Si₇ (TcSi_{1.75}), and x equals 3 as in IrSi₃. The fifteenth phase 107 hardly absorbs lithium or only absorbs a few.

The average particle diameter of the nanosized particle 101 is preferably from 2 nm to 500 nm, and more preferably, from 50 nm to 300 nm. According to Hall-Petch law, the yield stress increases when the particle size is small so, if the average particle diameter of the nanosized particle 101 is from 2 nm to 500 nm, the particle diameter size is sufficiently small, the yield stress is sufficiently large, and pulverization due to charging and discharging may not easily occur. If the average diameter is less than 2 nm, handling of the nanosized particles after composition is difficult. If the average diameter is more than 500 nm, the particle diameter size is too large and the yield stress is not sufficient.

The atomic ratio of the element D to the sum of the element A-1, the element A-2, and the element D is preferably from 0.01 % to 25 %. If this atomic ratio is from 0.01 % to 25 %, both cycle characteristics and large-capacity can be achieved when the nanosized particle 101 is used as a negative electrode material for the nonaqueous electrolyte rechargeable battery. On the other hand, if the ratio is below 0.01 %, the expansion of the volume of the nanosized particle 101 at the time of lithium absorption cannot be suppressed, and if the ratio is over 25 %, then the amount of the element D which combines with the element A - 1 increases, resulting in the decrease of the element A - 1 sites that are able to absorb lithium, and the advantages of the large-capacity are lost. If the nanosized particle includes the element D' as mentioned below, the atomic ratio of the sum of the element D and the element D' to the sum of the element A - 1, the element A - 2, the element D, and the element D' is preferably from 0.01 % to 25 %.

Also, sixteenth phases 111 which are compounds of the element A - 1 and the element D may be dispersed in the thirteenth phase 103 as in a nanosized particle 109 shown in FIG. 12 (b). The sixteenth phases 111 are covered with the thirteenth phase 103. The sixteenth phase 111, like the fifteenth phase 107, hardly absorbs lithium. Also, as shown in FIG. 12 (c), a part of the sixteenth phases 111 may be exposed to the surface. That is, the whole of the sixteenth phases 111 may not necessarily be covered around by the thirteenth phase 13, but only a part of the sixteenth phases 111 may be covered.

Although a plurality of the sixteenth phases 111 are dispersed in the thirteenth phase 103 in FIG. 12 (b), the single sixteenth phases 111 may be included.

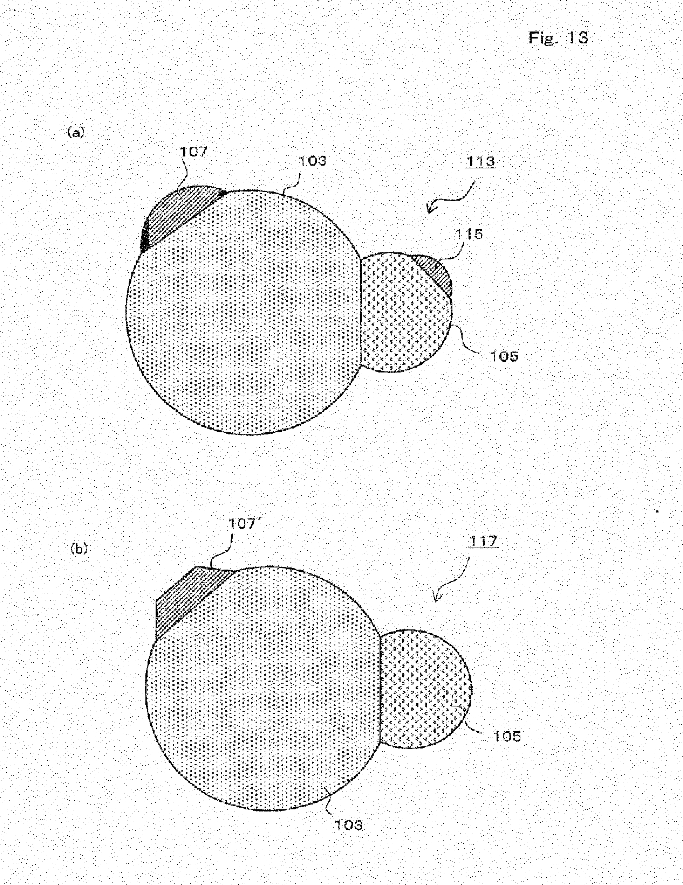

Also, the seventeenth phase 115, which is a compound of the element A - 1 and the element D, may be joined to the fourteenth phase 105 via an interface and exposed to the outer surface as a nanosized particle 113 shown in FIG. 13 (a). The seventeenth phase 115, like the fifteenth phase 107, hardly absorbs lithium.

Also, except for the interface, the fifteenth phase 107 may have a smooth and approximately spherical shape as the fifteenth phase 107 shown in FIG. 12 (a), or may be a polyhedron as the fifteenth phase 107' shown in FIG. 13 (b). The polyhedron shape is generated when the nanosized particles 101, 109, 110, 113, or 117 join and are detached afterwards.

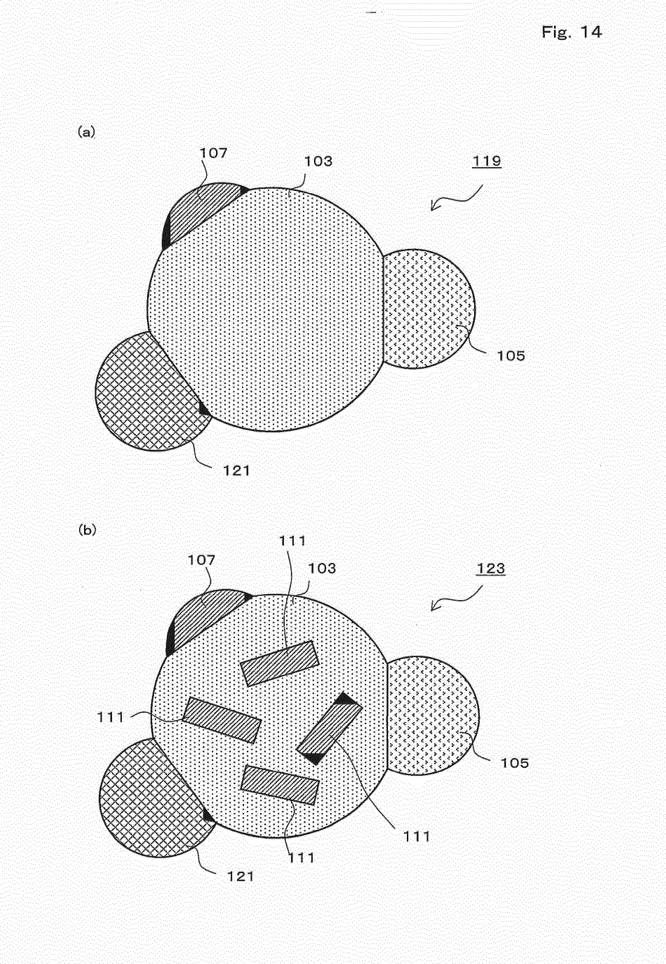

Also, the nanosized particle 101 according to the present invention may have an eighteenth phase 121 in addition to the fourteenth phase 105 as the nanosized particle 119 shown in FIG. 14 (a). The eighteen phase 121 is a simple substance or a solid solution of an element A- 3 which is an element selected from the group consisting of Si, Sn, Al, Pb, Sb, Bi, Ge, In, and Zn and is different form the element A- 1 and the element A - 2. The eighteen phase 121 has a spherical outer surface and is exposed to the outer surface of the nanosized particle 119. For example, silicon as the element A - 1, tin as the element A - 2, and aluminum as the element A - 3 may be used. Also, the sixteenth phase 111, which is a compound of the element A - 1 and the element D, may be dispersed in the thirteenth phase 103 as in a nanosized particle 123 shown in FIG. 14 (b).

If the element D includes two or more types of elements selected from the group provided for the selection of the element D, the other element D may also be included as a solution or as a compound in the fifteenth phase 107 and/or in the sixteenth phase 111, which are compound of one of the elements D and the element A - 1. That is, even if the nanosized particle includes two or more types of elements selected from the group provided for the selection of the element D, a nineteenth phase 127 may not be formed as in an element D' described below. For example, if the element A - 1 is Si, one of the elements D is Ni, and the other element D is Fe, Fe may exist in NiSi₂ as a solid solution. Also, when observed under EDS, the distribution of Ni and Fe is approximately the same in some cases, but is different in other cases, and the other element D is uniformly included in the fifteenth phase 107 and/or in the sixteenth phase 111 in some cases, but in other cases, is included only partially.

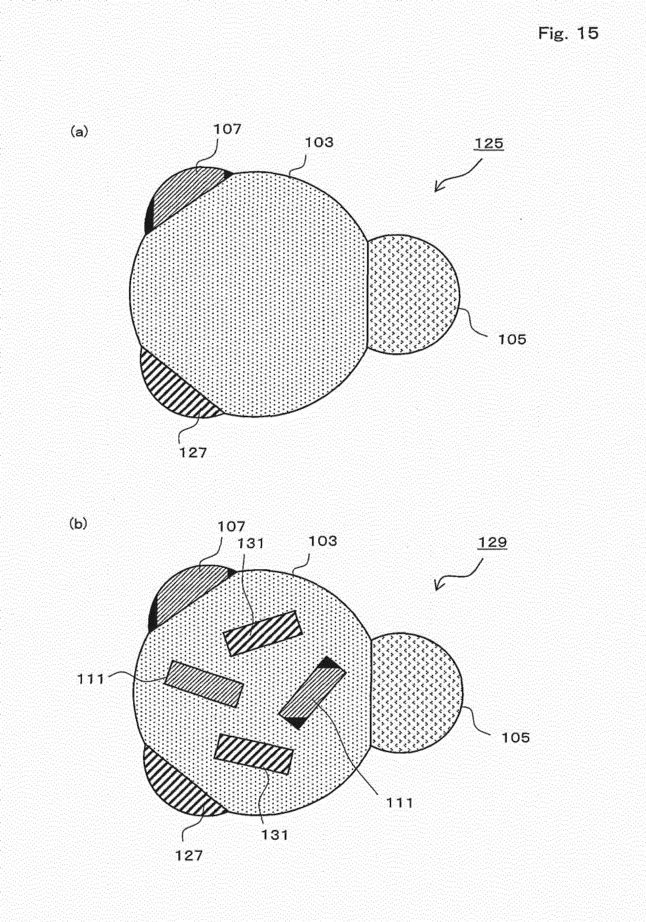

Also, in addition to the element D, the nanosized particle may include the element D'. The element D' is an element selected from the group provided for the selection of the element D and is different from the element D. A nanosized particle 125 shown in FIG. 15 (a) includes the element D and the element D', and has a nineteenth phase 127 in addition to the fifteenth phase 107, which is a compound of the element A and the element D. The nineteenth phase 127 is a compound of the element A - 1 and the element D'. The nanosized particle 125 may include a solid solution comprising the element D and the element D' (not shown in the drawing). For example, if the fifteenth phase 107 is a compound of Si and Fe and the nineteenth phase 127 is a compound of Si and Co, then the solid solution of the element D and the element D' is a solid solution of Fe and Co.

Also, as in a nanosized particle 129 shown in FIG. 15 (b), the sixteenth phase 11, which is a compound of the element A- 1 and the element D, and a twentieth phase 131, which is a compound of the element A - 1 and the element D', may be dispersed in the thirteenth phase 103. Furthermore, the sixteenth phase 111 or the twentieth phase 131 may be exposed to the surface as shown in FIG. 12 (c).

Oxygen may combine with the outermost surface of the nanosized particle 101. If the nanosized particle 101 is taken out into the air, oxygen in the air reacts with the element on the surface of the nanosized particle 101. That is, the outermost surface of the nanosized particle 101 may have an amorphous layer with a thickness of 0.5 nm to 15 nm, and particularly, may have an oxidized film layer if the thirteenth phase is mainly crystalline silicon.

### (6-2. The effects of the nanosized particles in accordance with the fourth embodiment)

According to the present invention, the thirteenth phase 103 expands in volume after absorbing lithium, and the fourteenth phase 105 also expands after absorbing lithium. However, since the electrochemical potential of absorption of lithium is different for the thirteenth phase 103 and the fourteenth phase 105, one of the phases primarily absorbs lithium and expands, while the expansion of the other phase becomes relatively smaller and suppresses the first phase from expanding. Therefore, compared to the nanosized particle that has only one of the phases, the nanosized particle 101, which has both the thirteenth phase 103 and the fourteenth phase 105, does not easily expand when absorbing lithium and the amount of absorption of lithium is suppressed. Therefore, according to the present invention, for the nanosized particle 101, the volumetric expansion is suppressed and the decline of discharging capacity due to the repetitive charging-discharging can be suppressed.

The thirteenth phase 103 expands in volume when lithium is absorbed. However, since the fifteenth phase 107 hardly absorb lithium, the expansion of the thirteenth phase 103 which is in contact with the fifteenth phase 107 can be suppressed. That is, if the thirteenth phase 103 absorbs lithium and tries to expand in volume, since the fifteenth phase 107 does not expand easily, the interface between the thirteenth phase 103 and the fifteenth phase 107 is not slippery, and the fifteenth phase 107 acts as a wedge or a pin, relaxes the volumetric strain, and prevents the expansion of the nanosized particle as a whole. Therefore, compared to the particle without the fifteenth phase 107, the nanosized particle 101 having the fifteenth phase 107 has fewer tendencies to expand when absorbing lithium and can easily return to its original shape with a restoring force when lithium is desorbed. Therefore, even when the nanosized particle 101 absorbs lithium, the strain due to volumetric expansion is relaxed and the decline of discharging capacity due to the repetitive charging-discharging can be suppressed.

Also, according to the present invention, since the nanosized particle 101 does not expand easily, the nanosized parcicle 101 does not easily react with oxygen in the atmosphere when taken out in the atmosphere. If a nanosized particle having only one of the phases is left in the atmosphere without surface protection, the nanosized particle reacts with oxygen from the surface and oxidization proceeds from the surface into the particle so that the whole nanosized particle oxidizes. However, if the nanosized particle 101 of the present invention is left in the atmosphere, although the outermost surface of the particle reacts with oxygen, oxidization cannot easily reach the central part of the nanosized particle 101 since the nanosized particle does not expand easily and oxygen cannot easily enter into the particle. Therefore, although a common metal nanosized particle has a large specific surface area and oxidize easily as a whole, causing to generate heat or expand in volume, it is not necessary to coat the surface of the nanosized particle 101 of the present invention with an organic substance or a metal oxide, so that the nanosized particle 101 can be handled in the atmosphere in powdery state and the industrial utility value is high.

Also, according to the present invention, since both the thirteenth phase 103 and the fourteenth phase 105 comprise elements that can absorb lithium more greatly than carbon, the nanosized particle 101 absorbs lithium more than the carbon negative electrode active material does.

Also, according to the present invention, if the fourteenth phase 105 has higher conductivity than the thirteenth phase 103, each of the nanosized particles 101 has nano-level current collecting spots so that the nanosized particle 101 can be a negative electrode material with good conductivity, and a negative electrode with good current collection properties can be obtained. In particular, if the thirteenth phase 103 is formed by silicon of which the conductivity is low, a negative electrode having better conductivity than the silicon nano particle can be obtained by using metal elements such as tin or aluminum that has higher conductivity than silicon for the fourteenth phase 105.

Also, for the nanosized particle 109 including the sixteenth phase 111 in the thirteenth phase 103, the expansion of the thirteenth phase 103 is suppressed since the most part of the thirteenth phase 13 is in contact with the phase that does not easily absorb lithium. As a result, even when the nanosized particle 109 absorbs lithium, the volumetric expansion and the decline of discharging capacity due to the repetitive charging-discharging can be suppressed.

For the nanosized particle 119 and 123, which have the fourteenth phase 105, the fifteenth phase 107, and the eighteenth phase 121, and the nanosized particle 125 and 129, which have the fourteenth phase 105, the fifteenth phase 107, and the nineteenth phase 127, the nano-level current collection spots increase and the current collection properties are dramatically improved.

Also, since most part of the thirteenth phase 103 of the nanosized particle 123, which includes the sixteenth phase 111 in the thirteenth phase 103, and the nanosized particle 129, which includes the sixteenth phase 111 and the twentieth phase 131 in the thirteenth phase 103, is in contact with the phase that does not absorb lithium, the expansion of the thirteenth phase 103 can be suppressed further. As a result, the volumetric expansion and the decline of discharging capacity due to the repetitive charging-discharging can be suppressed for the nanosized particle 123 and the nanosized particle 129 even when lithium is absorbed.

### (6-3. The method for manufacturing the nanosized particles)

The manufacturing method for the nanosized particles will be described.

The nanosized particles according to the present invention are synthesized by vapor phase synthesis. More specifically, the nanosized particles can be manufactured by generating plasma of the ingredient powder which is then heated up to about 10,000 K and cooled. There are several methods to generate plasma: (1) a method to heat the gas inductively using a high frequency electromagnetic field (2) a method to use arc discharge between electrodes (3) a method to heat the gas with microwave and the like; and any of the methods may be used.

That is, since the element D combines with the element A - 1 to form a compound and the element A - 1 and the element A - 2 does not form a compound, when the plasma of the ingredient powder is generated and then cooled, a part of the element A-1 forms a compound with the element M and the rest of the element A - 1 and the element A - 2 deposit as a simple substance or a solid solution. Therefore, the nanosized particle 101 that includes the thirteenth phase of a single substance or a solid solution of the element A - 1 to which the fourteenth phase, which is a single substance or a solid solution of the element A - 2, and the fifteenth phase, which is a compound of the element A - 1 and the element D, are joined via the interfaces can be obtained.

An example of the manufacturing apparatus for manufacturing the nanosized particles is the nanosized particle manufacturing apparatus 31 shown in FIG. 6.

Since the manufacturing method of the nanosized particles is a bottom-up method in which the nanosized particle deposits from plasma through gas and liquid to a solid, a particle becomes spherical at the droplet stage, and the thirteenth phase 103 and the fourteenth phase 105 are formed in spherical shapes. On the other hand, particles manufactured from a top-down method such as a crushing method or a mechanochemical method, which makes a large particle smaller, have distorted and rough shapes which differ greatly from the spherical shape of the nanosized particle 101.

If mixed powder of each powder of the element A - 1, the element A - 2, and the element D are used as the ingredient powder, the nanosized particles 101, 109, 113, and 117 in accordance with the present invention can be obtained. On the other hand, if mixed powder of each powder of the element A- 1, the element A- 2, the element A- 3, and the element D are used as the ingredient powder, the nanosized particles 119 and 123 can be obtained. Also, if mixed powder of each powder of the element A - 1, the element A - 2, the element D, and the element D' are used as the ingredient powder, the nanosized particles 125 and 129 can be obtained. For these nanosized particles, the consisting elements generate plasma, regardless of whether the plasma generator has a direct current system or alternative current system, and vaporize after cooling so that the consisting elements are mixed uniformly. With further cooling, the nanosized particles are formed from the vapor via nanosized droplets.

### (7. Manufacturing a nonaqueous electrolyte rechargeable battery)

### (7-1. Manufacturing a negative electrode for a nonaqueous electrolyte rechargeable battery)

As a negative electrode, the negative electrode for a nonaqueous electrolyte rechargeable battery in accordance with the present invention is used.

### (7-2. Manufacturing a positive electrode for a nonaqueous electrolyte rechargeable battery)

First, a positive electrode active material, a conductive agent, a binder, and a solvent are mixed to prepare a composition of the positive electrode material. The composition of the positive electrode material is applied directly onto a metal current collector such as aluminum foil and then dried to prepare the positive material.

For the positive electrode active material, any of the commonly used materials may be used; compounds such as LiCoO₂, LiMn₂O₄, LiMnO₂, LiNiO₂, LiCo_{1/3}Ni_{1/3}Mn_{1/3}O₂, LiFePO₄ are the examples.

As a conductive agent, for example, carbon black is used. As a binder, for example, polyvinylidene fluoride (PVdF) or water-soluble acrylic binder is used. As a solvent, N-methyl-2-pyrrolidone (NMP), water or the like is used. Here, the content of the positive electrode active material, the conductive agent, the binder, and the solvent is at the level that is commonly used for nonaqueous electrolyte rechargeable batteries.

### (7-3. Separator)

For a separator, any of the commonly used separators having a function of insulating electrical conduction between the positive and the negative electrodes can be used. For example, microporous polyolefin film, porous aramid resin film, porous ceramics, non-woven fabric, and he like can be used.

### (7-4. Electrolytic solution, Electrolyte)

As an electrolytic solution and an electrolyte for nonaqueous electrolyte rechargeable batteries, Li-polymer batteries and the like, an organic electrolytic solution (nonaqueous electrolyte solution), inorganic solid electrolyte solution, polymer solid electrolyte and the like can be used.

Examples of organic electrolytic solutions are: carbonate such as ethylene carbonate, propylene carbonate, butylene carbonate, diethyl carbonate, dimethyl carbonate, and methylethyl carbonate; ether such as diethyl ether, dibutyl ether, ethylene glycol dimethyl ether, ethylene glycol diethyl ether, ethylene glycol dibutyl ether and diethylene glycol dimethyl ether; aprotonic solvents such as benzonitrile, acetonitrile, tetrahydro franc, 2-methyl tetrahydro franc, gamma-butyrolactone, dioxolane, 4-methyl dioxolane, N, N-dimethyl formamide, dimethyl acetamide, dimethyl chlorobenzene, and nitrobenzene; or a mixed solvent in which two or more of the above solvents are mixed.

For the electrolyte of the organic electrolytic solution, one or two mixed electrolyte comprising lithium salt such as LiPF₆, LiClO₄, LiBF₄, LiAlO₄, LiAlCl₄, LiSbF₆, LiSCN, LiCl, LiCF₃SO₃, LiCF₃CO₃, LiC₄F₉SO₃, LiN(CF₃SO₂)₂ can be used.

As an additive to the organic electrolytic solution, it is preferable to add a compound that can form an effective solid electrolyte interface coating film on the surface of the negative electrode active material. For example, a material that has unsaturated bond in the molecule and is reduction polymerizable when charged, such as vinylene carbonate (VC), can be added.

Also, instead of the organic electrolytic solutions above, solid lithium ion conductor can be used. For example, a solid high polymer electrolyte, in which a polymer such as polyethylene oxide, polypropylene oxide, and polyethylene imine is mixed with the lithium salt, or a polymer gel electrolyte, in which a polymer is immersed in an electrolytic solution and processed into gel, can be used.

Further, inorganic materials such as lithium nitrides, lithium halogenides, lithium oxyacid salts, Li₄SiO₄, Li₄SiO₄-Lil-LiOH, Li₃PO₄-Li₄SiO₄, Li₂SiS₃, Li₃PO₄-Li₂S-SiS₂, or sulfurate phosphorus compounds can be used as an inorganic solid electrolyte.

### (7-5. Assembly of the nonaqueous electrolyte rechargeable battery)

A battery element is formed by disposing a separator between the positive electrode and the negative electrode mentioned above. Such battery elements are wound around, or layered in a cylindrical or square shaped battery case into which the electrolytic solution is poured to form a nonaqueous electrolyte rechargeable battery.

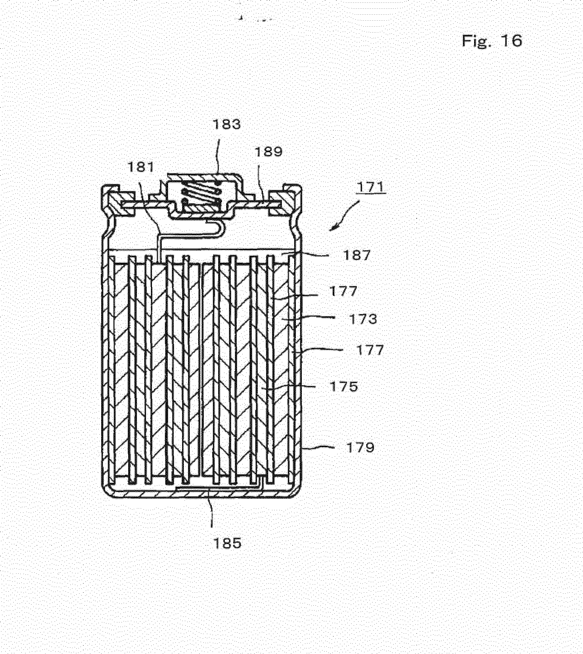

An example (cross-sectional view) of a nonaqueous electrolyte rechargeable battery of the present invention is shown in FIG. 16. In a nonaqueous electrolyte rechargeable battery 171, positive electrodes 173 and negative electrodes 175 are laminated via separators 177 in between in the order of "separator - positive electrode-separator - negative electrode", which is then wound around to form electrode plate group with the positive electrodes 173 being on the inside and inserted into a battery can 179. And, the positive electrodes 173 are connected to a positive electrode terminal 183 via a positive electrode lead 181 and the negative electrodes 175 are connected to the battery can 179 via a negative lead 185 so that chemical energy generated inside the nonaqueous electrolyte rechargeable battery 171 can be taken to the outside as electrical energy. Next, after filling up the battery can 179 with an electrolyte 187 as to overspread the electrode plate group, a sealer 189, which comprises a circular lid plate and a positive electrode terminal 183 which is at the top thereof and is equipped with a safety valve mechanism inside, is installed at the top end (the opening part) of the battery can 179 via a circular insulating gasket to manufacture the nonaqueous electrolyte rechargeable battery 171 of the present invention.

### (7-6. The effects of the nonaqueous electrolyte rechargeable battery in accordance with the present invention)

Since the nonaqueous electrolyte rechargeable battery using the negative electrode for the nonaqueous electrolyte rechargeable battery in accordance with the present invention includes the element A having a capacity which is larger than carbon per unit volume and per unit weight, its capacity is larger than the conventional nonaqueous electrolyte rechargeable batteries.

Also, since the active material layer is formed by applying the slurry after the active material particles form granules, an active material layer with high porosity can be obtained. Because of the high porosity of the active material layer, no excessive force is applied to the current collector even if the active material particles expand and contract.

Also, since strong binder such as polyimide is used to fix the granules onto the current collector as the active material layer, the granules bind to each other firmly and the current collector and the granules cohere firmly. Therefore, the nonaqueous electrolyte rechargeable battery in accordance with the present invention has a long life.

### EXAMPLES

Hereinafter, the present invention will be described specifically using examples and comparative examples.

### [Example 1-1]

### (Manufacturing nanosized particles)

Silicon powder and iron powder are mixed with a molecular ratio of Si : F e = 23 : 2 and dried to gain ingredient powder, which is then supplied continuously by carrier gas into the plasma of Ar - H₂ mixed gas generated in the reaction chamber of the apparatus shown in FIG. 6 to produce nanosized particles of silicon and iron.

The manufacturing process will be described in further detail below. After evacuating the reaction chamber with a vacuum pump, Ar gas is introduced to the atmospheric pressure. This process of evacuation and introduction of Ar gas is repeated three times to evacuate residual air in the reaction chamber. After that, Ar - H₂ mixed gas is introduced into the reaction chamber at the flow speed of 13 L/min and AC voltage is applied to the high frequency coil to generate the high frequency plasma by the high frequency magnetic field (frequency of 4 MHz). Here, the plate electrical power is 20 kW. As the carrier gas, Ar gas with the flow speed of 1.0 L/min is used to supply the ingredient powder. Slowly oxidizing process is carried out for twelve hours after the reaction is completed and fine powder obtained is collected through the filter.

### (Evaluation of the structure of the nanosized particles)

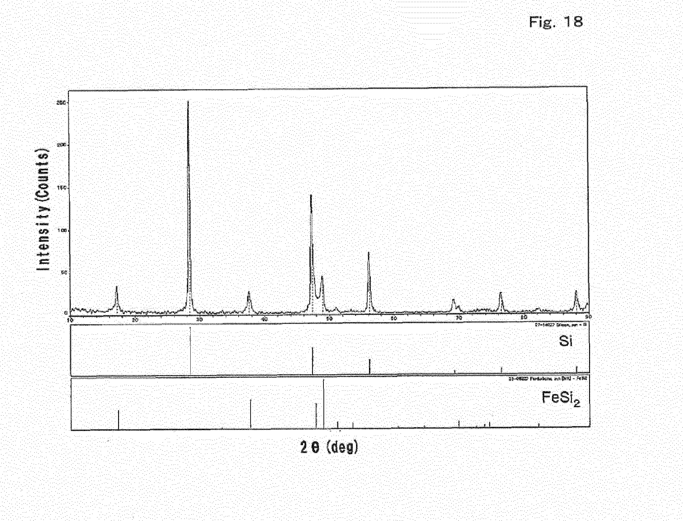

The crystalline property of the nanosized particles are examined in an XRD analysis using CuKα ray by the use of RINT - UltimaIII made by Rigaku Corp,.. FIG. 18 shows the XRD diffraction pattern of the nanosized particles of Example 1-1 in the range from 10° to 90°. It is found that the nanosized particles in accordance with Example 1-1 comprise two components: Si and FeSi₂. It is also found that Fe only exists as silicide, FeSi₂, and the simple substance of Fe (valence is 0) hardly exists at all.

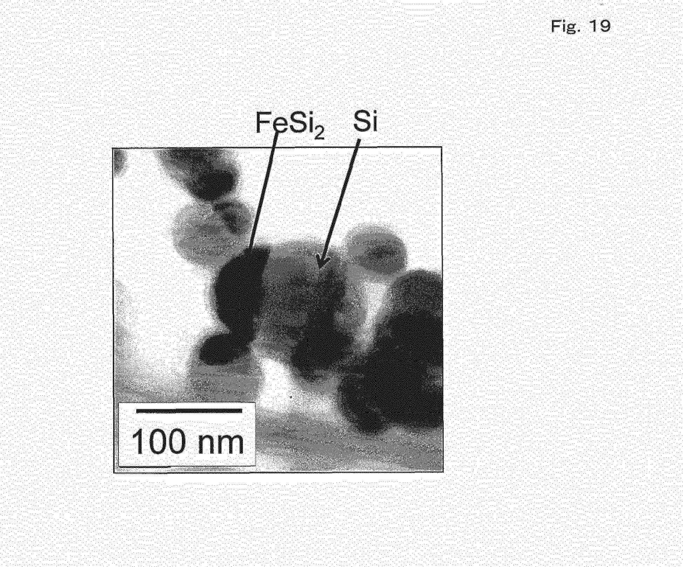

The particle shapes of the nanosized particles are observed using a transmission electron microscope (TEM). FIG. 19 is a TEM image of the nanosized particles in accordance with Example 1-1. A nanosized particle, which is an approximately spherical particle with a particle diameter of approximately 80 nm to 150 nm and is joined with a hemispherical particle via an interface, is observed. Within the same particle, the dark colored spot is iron silicide including iron and the comparatively light colored spot is silicon. Also, it can be observed that amorphous silicon oxide film of 2 nm to 4 nm thickness is formed on the surface of the nanosized particle.

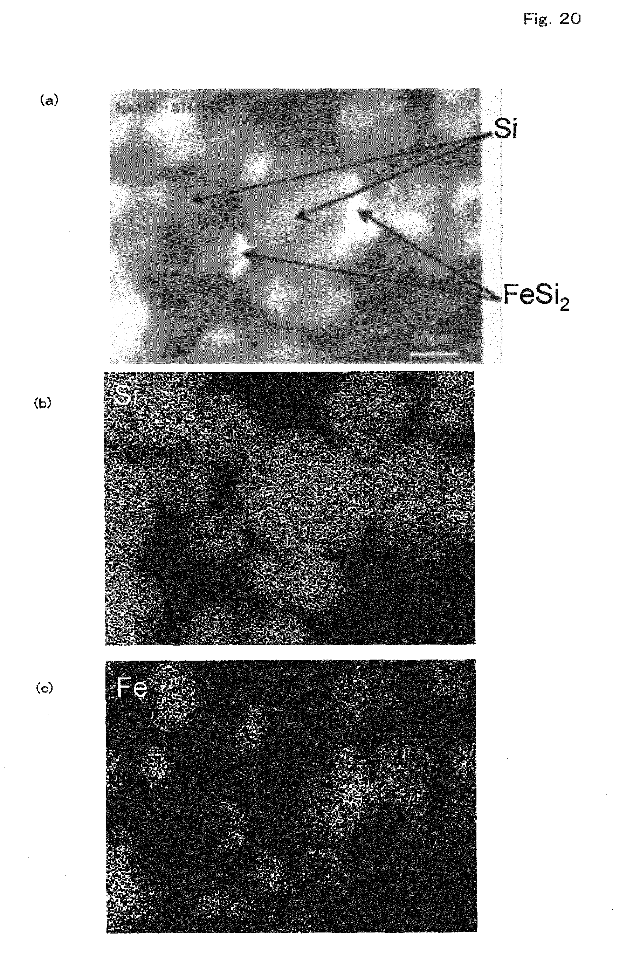

The observation of the particle shapes and the composition analysis of the nanosized particles in accordance with Example 1-1 are conducted: the particle shapes are observed by HADF-STEM using a scanning transmission electron microscope (JEM 3100FEF made by JEOL Ltd.) and the composition analysis of the nanosized particles in accordance with Example 1-1 is performed in EDS (Energy Dispersive Spectroscopy : energy dispersive X-ray diffraction analysis) analysis. FIG. 20 (a) is a HAADF-STEM image of the nanosized particles, FIG. 20 (b) is an EDS map of silicon atoms observed at the same spot, and FIG. 20 (c) is an EDS map of iron atoms observed at the same spot.

According to FIG. 20 (a), nanosized particles with the particle diameter of approximately 50 nm to 150 nm are observed and each of the nanosized particles is approximately spherical respectively. From FIG. 20 (b), it is found that silicon atoms exist over the whole nanosized particles and, from FIG. 20 (c), many iron atoms are detected in the bright spots observed in FIG. 20 (a). It is found from the above results that the nanosized particle has a structure in which the first phase formed by silicon is joined with the second phase formed by the compound of silicon and iron.

### (Manufacturing granules)

64 pts.mass of the nanosized particle is mixed with 5 pts.mass in terms of solid content of polyimide (HCI-1000S made by Hitachi Chemical Co., Ltd.) as a binder to produce slurry. This slurry is granulated by spray dry method to produce granules. Then, the obtained granules are heat-treated at 330 C° to solidify the binder included in the granules.

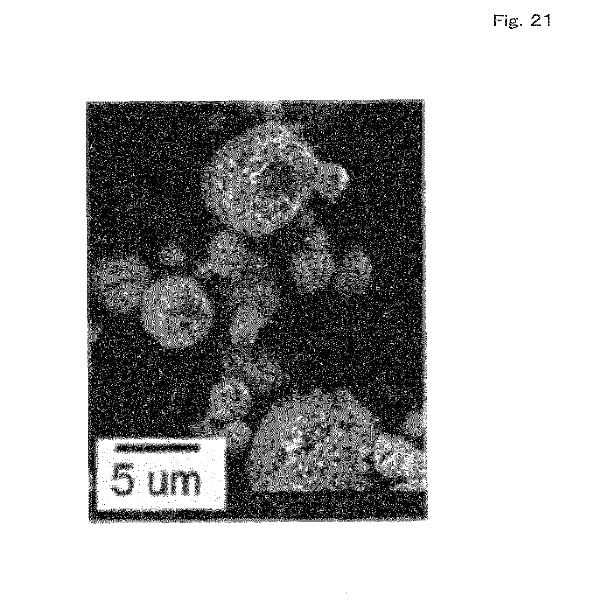

An SEM photograph of the granules is shown in FIG. 21. The granules with the diameter of 1µm to 10 µm are observed.

### (Manufacturing the negative electrode)

69 pts.mass of the granules (containing 64 pts.mass of the nanosized particles), 16 pts.mass of acetylene black, and 5 pts.mass in terms of solid content of polyimide are mixed to produce slurry.

The prepared slurry is applied to a thickness of 15 µm onto an electrolyte copper foil for current collectors (NC-WS made by Furukawa Electric Co., Ltd.) having a thickness of 10 µm by using a doctor blade of an automated coated apparatus, dried at 100 °C, pressed for thickness regulation, and then baked at 330 °C to manufacture a negative electrode for a nonaqueous electrolyte rechargeable battery.

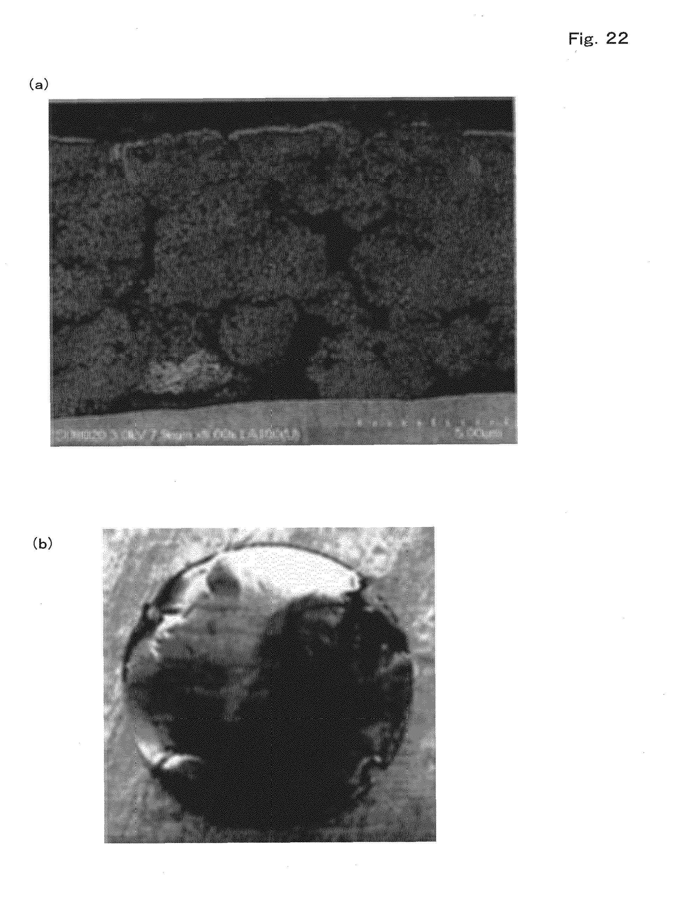

A cross-sectional view of the negative electrode in accordance with Example 1-1 is shown in FIG. 22 (a). It can be seen that granule particles are disposed having cavities on the current collector. Also, the negative electrode is taken out after 500 times of charging and discharging and the active material layer is removed to observe the current collector, which is shown in FIG. 22 (b). It can be seen that hardly any wrinkles are generated on the current collector.

### (Evaluation of cycle characteristics)

A negative electrode for the nonaqueous electrolyte rechargeable battery, an electrolyte solution comprising a mixed solution of ethylene carbonate, diethyl carbonate, and ethylmethyl carbonate including 1.3 mol/L LiPF6 added with vinylene carbonate, and a counter electrode of metal Li foil are prepared to form three different lithium rechargeable batteries, and the charging and discharging characteristics are examined. The initial discharging capacity and discharging capacities after 1 to 200 cycles of charging and discharging are measured and then the maintenance rate of the discharging capacity is calculated to evaluate the characteristics. The discharging capacity is calculated on the basis of gross weight of silicide and Si that is an active material effective in absorbing and desorbing lithium.

First, in Cycle 1, charging is performed in the environment of 25 °C under the conditions of constant current and constant voltage up to the current value of 0.1 C and the voltage value 0.02 V, and the charging is stopped when the current value drops to 0.05 C. Next, discharging is performed under the condition of the current value of 0.1 C until the voltage onto the metal Li becomes 1.5 V and the 0.1 C initial discharging capacity is measured. 1 C is the current value that can be fully charged in an hour.

In Cycles 2 to 30, charging is performed in the environment of 25 °C under the conditions of constant current and constant voltage up to the current value of 0.2 C and the voltage value 0.02 V, and the charging is stopped when the current value drops to 0.05 C. Next, discharging is performed under the condition of the current value of 0.2 C until the voltage onto the metal Li becomes 1.5 V.

In Cycle 31, charging is performed in the environment of 25 °C under the conditions of constant current and constant voltage up to the current value of 0.2 C and the voltage value 0.02 V, and the charging is stopped when the current value drops to 0.05 C. Next, discharging is performed under the condition of the current value of 0.5 C until the voltage onto the metal Li becomes 1.5 V.

In Cycle 32, charging is performed in the environment of 25 °C under the conditions of constant current and constant voltage up to the current value of 0.2 C and the voltage value 0.02 V, and the charging is stopped when the current value drops to 0.05 C. Next, discharging is performed under the condition of the current value of 1.0 C until the voltage onto the metal Li becomes 1.5 V.

In Cycle 33, charging is performed in the environment of 25 °C under the conditions of constant current and constant voltage up to the current value of 0.2 C and the voltage value 0.02 V, and the charging is stopped when the current value drops to 0.05 C. Next, discharging is performed under the condition of the current value of 2.0 C until the voltage onto the metal Li becomes 1.5 V.

In Cycle 34, charging is performed in the environment of 25 °C under the conditions of constant current and constant voltage up to the current value of 0.2 C and the voltage value 0.02 V, and the charging is stopped when the current value drops to 0.05 C. Next, discharging is performed under the condition of the current value of 5.0 C until the voltage onto the metal Li becomes 1.5 V.

In Cycles 35 to 500, charging is performed in the environment of 25 °C under the conditions of constant current and constant voltage up to the current value of 0.5 C and the voltage value 0.02 V, and the charging is stopped when the charging time reached three hours. Next, discharging is performed under the condition of the current value of 5.0 C until the voltage onto the metal Li becomes 1.5 V.

### [Example 1-2]

Using the same nanosized particles as Example 1-1, a negative electrode is produced similarly as Example 1-1, except that 4 pts.mass of acetylene black is added when forming the granules and 4 pts.mass of acetylene black is added to the slurry.

### [Comparative Example 1]

The nanosized particles in accordance with Example 1-1 and acetylene black in the ratio of 64 pts.mass to 16 pts.mass are put into a mixer. A negative electrode is produced similarly as Example 1-1, except that, unlike Example 1-1, this was not granulated, but 20 pts.mass in terms of solid content of polyimide is further mixed as a binder to form the slurry.

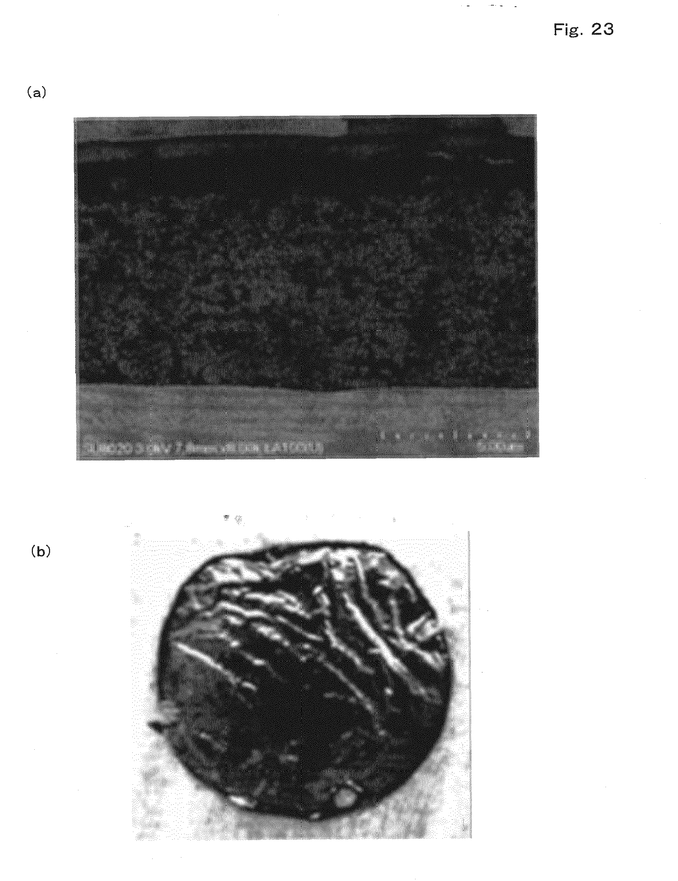

The cross-sectional view of the negative electrode in accordance with Comparative Example 1 is shown in FIG. 23 (a). The active material particles are compactly disposed on the current collector and it can be seen that there are no cavities in the active material phase. Also, a photograph of the current collector after one repetition of charging and discharging is shown in FIG. 23 (b). It can be seen that there are many wrinkles on the current collector.

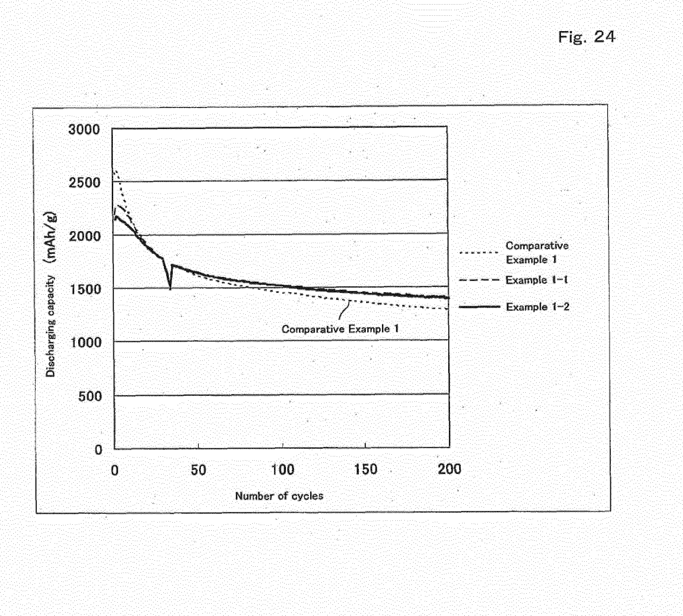

The evaluation result of the cycle characteristics of Example 1-1, Example 1-2, and Comparative Example 1 is shown in FIG. 24. Compared to Comparative Example 1, Example 1-1 and Example 1-2 have higher capacity maintenance rates.

That is, the cycle characteristics are improved because the stress to the copper foil is relaxed and the copper foil does not wrinkle since there are many cavities in the active material layer.

### [Example 2-1]

A negative electrode is produced similarly as Example 1-1, except that pure silicon particles having the particle diameter of 100 nm are used instead of the nanosized particles as the active material particles and the amount of polyimide added when producing the granules is 4 pts.mass.

### [Example 2-2]

A negative electrode is produced similarly as Example 2-1, except that the amount of polyimide added when producing the granules is 7 pts.mass and the amount of polyimide added to the coating slurry is 13 pts.mass.

### [Example 2-3]

A negative electrode is produced similarly as Example 2-1, except that the amount of polyimide added is 7 pts.mass and the amount of acetylene black is 7 pts.mass when producing the granules, and the amount of polyimide is 13 pts.mass and the amount of acetylene black is 9 pts.mass that are added to the coating slurry.

### [Comparative Example 2]

A negative electrode is produced similarly as Comparative Example 1, except that pure silicon particles having the particle diameter of 100 nm are used instead of the nanosized particles as the active material particles.

The conditions of each of Examples and Comparative Examples are shown in Table 1. That is, in Examples 2-1 to 2-3, the negative electrodes eventually include the same amount of the active material, acetylene black, and polyimide, but the amount that is to be added to the granules or the slurry is varied.

**[Table 1]**

| | | Example 1-1 | Example 1-2 | Comparative Example 1 | Example 2-1 | Example 2-2 | Example 2-3 | Comparative Example 2 |
|---|---|---|---|---|---|---|---|---|
| Type of active material | | Si:Fe=23:2 Nanosize particles | Si:Fe=23:2 Nanosize particles | Si:Fe=23:2 Nanosize particles | 100nm Silicon | 100nm Silicon | 100nm Silicon | 100nm Silicon |
| E l e c t r o d e | Amount of active material | 64 | 64 | 64 | 64 | 64 | 64 | 64 |
| | Amount of acetylene black | 16 | 8 | 16 | 16 | 16 | 16 | 16 |
| | Amount of polyimide | 20 | 20 | 20 | 20 | 20 | 20 | 20 |
| G r a n u l e s | Amount of active material | 64 | 64 | - | 64 | 64 | 64 | - |
| | Amount of acetylene black | 0 | 4 | - | 4 | 4 | 7 | - |
| | Amount of polyimide | 5 | 5 | - | 5 | 7 | 7 | - |
| S l u r r y | Amount of granulate | 69 | 73 | - | 73 | 75 | 78 | - |
| | Amount of conductive agent mixed in slurry | 16 | 4 | - | 12 | 12 | 9 | - |
| | Binder mixed in slurry | 15 | 15 | - | 15 | 13 | 13 | - |

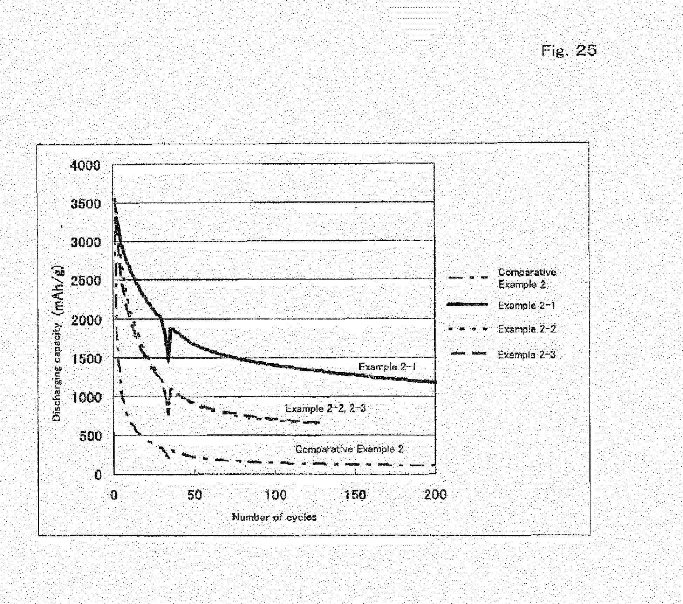

The evaluation result of the cycle characteristics of Example 2-1 to 2-3 and Comparative Example 2 is shown in FIG. 25. Compared to Comparative Example 2, the cycle characteristics of Example 2-1 to 2-3 are better because of granulation. Particularly, the discharging capacity after 20 cycles is the largest when acetylene black and polyimide are added to the granules and the slurry at the ratio of Example 2-1.

Although the embodiments of the present invention have been described referring to the attached drawings, the technical scope of the present invention is not limited to the embodiments described above. It is obvious that persons skilled in the art can think out various examples of changes or modifications within the scope of the technical idea disclosed in the claims, and it will be understood that they naturally belong to the technical scope of the present invention.

### EXPLANATION OF NUMERALS

1, 1a ..... negative electrode for nonaqueous electrolyte rechargeable battery
3 ..... current collector
5, 5a ..... active material layer
6 ..... conductive agent
7 ..... granule
8 ..... coating binder
9 ..... active material particle
10 ..... granulation binder
11 ..... nanosized particle
13 ..... first phase
15 ..... second phase
17 ..... nanosized particle
18 ..... nanosized particle
19 ..... third phase
21 ..... nanosized particle
22 ..... nanosized particle
23 ..... nanosized particle
25 ..... fourth phase
27 ..... nanosized particle
29 ..... fifth phase
31 ..... nanosized particle manufacturing apparatus
35 ..... ingredient powder supply opening
37 ..... ingredient powder
39 ..... sheath gas supply opening
41 ..... sheath gas
43 ..... carrier gas
45 ..... reaction chamber
47 ..... high frequency coil
49 ..... high frequency power source
51 ..... plasma
53 ..... filter
61 ..... nanosized particle
64 ..... sixth phase
65 ..... seventh phase
67 ..... nanosized particle
69 ..... eighth phase
71 ..... nanosized particle
73 ..... nineth phase
75 ..... nanosized particle
76 ..... nanosized particle
77 ..... tenth phase
79 ..... nanosized particle
81 ..... nanosized particle
83 ..... nanosized particle
85 ..... eleventh phase
87 ..... nanosized particle
89 ..... twelfth phase
91 ..... nanosized particle
101 ..... nanosized particle
103 ..... thirteenth phase
105 ..... fourteenth phase
107 ..... fifteenth phase
109 ..... nanosized particle
110 ..... nanosized particle
111 ..... sixteenth phase
113 ..... nanosized particle
115 ..... seventeenth phase
117 ..... nanosized particle
119 ..... nanosized particle
121 ..... eighteenth phase
123 ..... nanosized particle
125 ..... nanosized particle
127 ..... nineteenth phase
129 ..... nanosized particle
131 ..... twentieth phase
171 ..... nonaqueous electrolyte rechargeable battery
173 ..... positive electrode
175 ..... negative electrode
177 ..... separator
179 ..... battery can
181 ..... positive electrode lead
181 ..... positive electrode terminal
185 ..... negative electrode lead
187 ..... electrolyte
189 ..... sealer
201 ..... negative electrode for nonaqueous electrolyte rechargeable battery
203 ..... current collector
205 ..... active material layer
207 ..... active material particle
207a ..... active material particle after charging
209 ..... binder

## Claims

1. A negative electrode for a nonaqueous electrolyte rechargeable battery comprising:
an active material layer on a current collector, the active material layer including at least granules and one or more types of coating binder comprising any of polyimide, polybenzimidazole, polyamide imide, and polyamide wherein,
the granules include at least:
active material particles including at least one type of element A selected from a group consisting of Si, Sn, Al, Pb, Sb, Bi, Ge, In, and Zn; and
a granulation binder.

2. The negative electrode for a nonaqueous electrolyte rechargeable battery according to Claim 1 wherein,
the granulation binder comprises any one or more of polyimide, polybenzimidazole, styrene butadiene rubber, polyvinylidene fluoride, carboxyl methyl cellulose, and polyacrylic acid.

3. The negative electrode for a nonaqueous electrolyte rechargeable battery according to Claim 1 wherein,
the granules further include any one or more of carbon black, carbon nanotube, and carbon fiber as a conductive agent.

4. The negative electrode for a nonaqueous electrolyte rechargeable battery according to Claim 1 wherein,
the active material layer further includes any one or more of carbon black, carbon nanotube, and carbon fiber as a conductive agent.

5. The negative electrode for a nonaqueous electrolyte rechargeable battery according to Claim 1 wherein,
the average particle diameter of the active material particles is 2 nm to 500 nm.

6. The negative electrode for a nonaqueous electrolyte rechargeable battery according to Claim 1 wherein,
the active material particle is a nanosized particle comprising an element A and an element D,
the element A being at least one type of an element selected from the group consisting of Si, Sn, Al, Pb, Sb, Bi, Ge, In, and Zn;
the element D being at least one type of an element selected from the group consisting of Fe, Co, Ni, Ca, Sc, Ti, V, Cr, Mn, Sr, Y, Zr, Nb, Mo, Tc, Ru, Rh, Ba, lanthanoid elements (except for Pm), Hf, Ta, W, Re, Os, and Ir;
the nanosized particle at least including a first phase, which is a simple substance or a solid solution of the element A, and a second phase, which is a compound of the element A and the element D;
the first phase and the second phase being joined via an interface;
the first phase and the second phase being exposed to the outer surface of the nanosized particle; and
the first phase having an approximately spherical surface except for the interface.

7. The negative electrode for a nonaqueous electrolyte rechargeable battery according to Claim 6 wherein,
the element A is Si; and
the element D is at least one type of an element selected from the group consisting of Fe, Co, Ni, Ca, Sc, Ti, V, Cr, Mn, Sr, Y, Zr, Nb, Mo, Ru, Rh, Ba, Hf, Ta, W, and Ir.

8. The negative electrode for a nonaqueous electrolyte rechargeable battery according to Claim 6 wherein,
the second phase is a compound DAₓ (1 < x <= 3).

9. The negative electrode for a nonaqueous electrolyte rechargeable battery according to Claim 6 wherein,
the nanosized particle further includes a third phase which is a compound of the element A and the element D; and
the third phase is dispersed in the first phase.

10. The negative electrode for a nonaqueous electrolyte rechargeable battery according to Claim 9 wherein,
the first phase is mainly crystalline silicon; and
the second phase and/or the third phase is crystalline silicide.

11. The negative electrode for a nonaqueous electrolyte rechargeable battery according to Claim 6 wherein,
the nanosized particle further includes an element D' which is at least one type of an element selected from the group consisting of Fe, Co, Ni, Ca, Sc, Ti, V, Cr, Mn, Sr, Y, Zr, Nb, Mo, Tc, Ru, Rh, Ba, lanthanoid elements (except for Pm), Hf, Ta, W, Re, Os, and Ir;
the element D' is a different element from the element D which forms the second phase;
the nanosized particle further includes a fourth phase which is a compound of the element A and the element D';
the first phase and the fourth phase are joined via an interface; and
the fourth phase is exposed to the outer surface of the nanosized particle.

12. The negative electrode for a nonaqueous electrolyte rechargeable battery according to Claim 1 wherein,
the active material particle is a nanosized particle including the element A and an element M;
the element A is at least one type of an element selected from the group consisting of Si, Sn, Al, Pb, Sb, Bi, Ge, In, and Zn;
the element M is at least one type of an element selected from the group consisting of Cu, Ag, and Au;
the nanosized particle includes a sixth phase, which is a simple substance or a solid solution of the element A, and a seventh phase, which is a compound of the element A and the element M, or a simple substance or a solid solution of the element M;
the sixth phase and the seventh phase are joined via an interface;
both of the sixth phase and the seventh phase are exposed to the outer surface of the nanosized particle; and
the sixth phase and the seventh phase have approximately spherical surfaces except for the interface.

13. The negative electrode for a nonaqueous electrolyte rechargeable battery according to Claim 12 wherein,
the seventh phase is a compound MAₓ (x <=1, 3 < x).

14. The negative electrode for a nonaqueous electrolyte rechargeable battery according to Claim 12 wherein,
the nanosized particle further includes an element M' which is at least one type of an element selected from the group consisting of Cu, Ag, and Au;
the element M' is a different element from the element M which forms the seventh phase;
the nanosized particle further includes a eighth phase which is a compound of the element A and the element M', or a simple substance or a solid solution of the element M';
the sixth phase and the eighth phase are joined via an interface;
the eighth phase is exposed to the outer surface of the nanosized particle; and the eighth phase has an approximately spherical surface except for the interface.

15. The negative electrode for a nonaqueous electrolyte rechargeable battery according to Claim 12 wherein,
the nanosized particle further includes an element D which is at least one type of an element selected from the group consisting of Fe, Co, Ni, Ca, Sc, Ti, V, Cr, Mn, Sr, Y, Zr, Nb, Mo, Tc, Ru, Rh, Ba, lanthanoid elements (except for Pm), Hf, Ta, W, Re, Os, and Ir;
the nanosized particle further includes a nineth phase which is a compound of the element A and the element D;
the sixth phase and the nineth phase are joined via an interface; and
the nineth phase is exposed to the outer surface of the nanosized particle.

16. The negative electrode for a nonaqueous electrolyte rechargeable battery according to Claim 15 wherein,
the nanosized particle includes a tenth phase which is a compound of the element A and the element D; and
a part or the whole of the tenth phase is covered with the sixth phase.

17. The negative electrode for a nonaqueous electrolyte rechargeable battery according to Claim 15 wherein,
the nanosized particle further includes an element D' which is at least one type of an element selected from the group consisting of Fe, Co, Ni, Ca, Sc, Ti, V, Cr, Mn, Sr, Y, Zr, Nb, Mo, Tc, Ru, Rh, Ba, lanthanoid elements (except for Pm), Hf, Ta, W, Re, Os, and Ir;
the element D' is a different element from the element D which forms the nineth phase;
the nanosized particle further includes a eleventh phase which is a compound of the element A and the element D';
the sixth phase and the eleventh phase are joined via an interface; and
the eleventh phase is exposed to the outer surface of the nanosized particle.

18. The negative electrode for a nonaqueous electrolyte rechargeable battery according to Claim 17 wherein,
the nanosized particle further includes a twelfth phase which is a compound of the element A and the element D'; and
a part or the whole of the twelfth phase is covered with the sixth phase.

19. The negative electrode for a nonaqueous electrolyte rechargeable battery according to Claim 1 wherein,
the active material particle is a nanosized particle which includes an element A - 1, an element A- 2, and the element D;
the element A- 1 and the element A - 2 are two types of elements selected from the group consisting of Si, Sn, Al, Pb, Sb, Bi, Ge, In, and Zn;
the element D is at least one type of an element selected from the group consisting of Fe, Co, Ni, Ca, Sc, Ti, V, Cr, Mn, Sr, Y, Zr, Nb, Mo, Tc, Ru, Rh, Ba, lantlianoid elements (except for Pm), Hf, Ta, W, Re, Os, and Ir;
the nanosized particle includes a thirteenth phase, which is a simple substance or a solid solution of the element A - 1, a fourteenth phase, which is a simple substance or a solid solution of the element A- 2, and a fifteenth phase, which is a compound of the element A - 1 and the element D;
the thirteenth phase and the fourteenth phase are joined via an interface;
the thirteenth phase and the fifteenth phase are joined via an interface;
the thirteenth phase and the fourteenth phase have approximately spherical surfaces except for the interface; and
the thirteenth phase, the fourteenth phase, and the fifteenth phase are exposed to the outer surface of the nanosized particle.

20. The negative electrode for a nonaqueous electrolyte rechargeable battery according to Claim 19 wherein,
the element A - 1 and the element A - 2 are two types of elements selected from the group consisting of Si, Sn, and Al;
the element D is one type of an element selected from the group consisting of Fe, Co, Ni, Ca, Sc, Ti, V, Cr, Mn, Sr, Y, Zr, Nb, Mo, Tc, Ru, Rh, and Ba.

21. The negative electrode for a nonaqueous electrolyte rechargeable battery according to Claim 19 wherein,
the nanosized particle further includes a sixteenth phase which is a compound of the element A - 1 and the element D; and
a part or the whole of the sixteenth phase is covered with the thirteenth phase.

22. The negative electrode for a nonaqueous electrolyte rechargeable battery according to Claim 19 wherein,
the nanosized particle further includes a seventeenth phase which is a compound of the element A- 1 and the element D;
the seventeenth phase joins with the fourteenth phase via an interface and is exposed to the outer surface of the nanosized particle..

23. The negative electrode for a nonaqueous electrolyte rechargeable battery according to Claim 19 wherein,
any one or more of the fifteenth phase, the sixteenth phase, and the seventeenth phase is a compound D(A- 1)ₓ (1 < x <= 3).

24. The negative electrode for a nonaqueous electrolyte rechargeable battery according to Claim 19 wherein,
the nanosized particle further includes an element A - 3 which is one type of an element selected from the group consisting of Si, Sn, Al, Pb, Sb, bi, Ge, In, and Zn;
the element A - 3 is a different type of element from the element A - 1 and the element A- 2;
the nanosized particle includes a eighteenth phase which is a simple substance or a solid solution of the element A- 3;
the thirteenth phase and the eighteenth phase are joined via an interface;
the eighteenth phase has an approximately spherical surface except for the interface; and
the eighteenth phase is exposed to the outer surface of the nanosized particle.

25. The negative electrode for a nonaqueous electrolyte rechargeable battery according to Claim 19 wherein,
the nanosized particle further includes the element D' which is at least one type of an element selected from the group consisting of Fe, Co, Ni, Ca, Sc, Ti, V, Cr, Mn, Sr, Y, Zr, Nb, Mo, Tc, Ru, Rh, Ba, lanthanoid elements (except for Pm), Hf, Ta, W, Re, Os, and Ir;
the element D' is a different type of element from the element D that forms the fifteenth phase;
the nanosized particle further includes a nineteenth phase which is a compound of the element A- 1 and the element D';
the thirteenth phase and the nineteenth phase are joined via an interface; and the nineteenth phase is exposed to the outer surface of the nanosized particle.

26. The negative electrode for a nonaqueous electrolyte rechargeable battery according to Claim 25 wherein,
the nanosized particle further includes a twentieth phase which is a compound of the element A- 1 and the element D'; and
a part or the whole of the twentieth phase is covered with the thirteenth phase.

27. The negative electrode for a nonaqueous electrolyte rechargeable battery according to Claim 6 wherein,
the average diameter of the nanosized particles is 2 nm to 500 nm.

28. A nonaqueous electrolyte rechargeable battery comprising:
a positive electrode that can absorb and desorb lithium;
the negative electrode according to Claim 1; and
a separator which is disposed between the positive electrode and the negative electrode, the positive electrode, the negative electrode, and the separator being provided in an electrolyte having lithium ion conductivity.
